(19) Europäisches Patentamt
European Patent Office
Office européen des brevets

(11) **EP 4 080 416 A1**

(12) **EUROPEAN PATENT APPLICATION**
published in accordance with Art. 153(4) EPC

(43) Date of publication:
**26.10.2022 Bulletin 2022/43**

(21) Application number: **21740665.1**

(22) Date of filing: **15.01.2021**

(51) International Patent Classification (IPC):
**G06N 3/08** (2006.01)

(52) Cooperative Patent Classification (CPC):
**G06N 3/08**

(86) International application number:
**PCT/CN2021/072294**

(87) International publication number:
**WO 2021/143883 (22.07.2021 Gazette 2021/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2020 CN 202010044288**

(71) Applicant: **Huawei Technologies Co., Ltd.**
**Shenzhen, Guangdong 518129 (CN)**

(72) Inventors:
• **CHEN, Minqi**
**Shenzhen, Guangdong 518129 (CN)**
• **DENG, Chuanyun**
**Shenzhen, Guangdong 518129 (CN)**
• **HU, Xiangyu**
**Shenzhen, Guangdong 518129 (CN)**
• **TANG, Shaohua**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **ADAPTIVE SEARCH METHOD AND APPARATUS FOR NEURAL NETWORK**

(57) This application relates to the field of neural networks, and provides an adaptive search method and apparatus for a neural network, so that adaptive search for a neural network on a hardware platform can be implemented. The method includes: receiving a search condition set, where the search condition set includes target hardware platform information, network structure information of a source neural network, and one or more evaluation metrics, where the network structure information of the source neural network is used to represent the source neural network; performing a training process on a to-be-trained super network based on a training dataset, to obtain a trained super network, where the to-be-trained super network is obtained by extending a network structure of the source neural network; and performing a subnet search process on the trained super network based on the one or more evaluation metrics, to obtain network structure information of a target neural network, where the network structure information of the target neural network is used to represent the target neural network, and an evaluation result of the target neural network running on a target hardware platform is better than an evaluation result of the source neural network running on the target hardware platform.

FIG. 4

**Description**

This application claims priority to Chinese Patent Application No. 202010044288.8, filed with the China National Intellectual Property Administration on January 15, 2020 and entitled "ADAPTIVE SEARCH METHOD AND APPARATUS FOR NEURAL NETWORK", which is incorporated herein by reference in its entirety.

**TECHNICAL FIELD**

This application relates to the field of neural networks, and in particular, to an adaptive search method and apparatus for a neural network.

**BACKGROUND**

In recent years, a neural network has developed rapidly in computer vision applications. As a correctness rate of the neural network gradually increases, a network structure of the neural network becomes increasingly complex, and a requirement for a computing resource of a device is increasingly high. Consequently, a running speed of the device is low, and time overheads are high.

Currently, in a neural network search method in the conventional technology, a neural network model is generally searched for based on floating-point operations per second (floating-point operations per second, FLOPS). The FLOPS is usually used to estimate running efficiency (also referred to as a model overhead) of a hardware platform. When the neural network model is searched for based on the FLOPS, a same target neural network may be found for different hardware platforms. The same target neural network on the different hardware platforms has same FLOPS (for example, addition and multiplication calculation amounts of the target neural network on the different hardware platforms). However, it does not mean that lower FLOPS indicates shorter inference time of the neural network model. For example, there are three existing hardware platforms: a hardware platform 1 (CPU 1), a hardware platform 2 (CPU 2), and a hardware platform 3 (GPU). In the conventional technology, when a neural network is searched for based on the FLOPS, a same target neural network may be found. FLOPS of the target neural network on the three hardware platforms is low. However, in an actual running process, because structures of the three hardware platforms are different, the target neural network may have better running effect on the hardware platform 1, an average running effect on the hardware platform 2, and a poorer running effect on the hardware platform 3.

Alternatively, when the neural network model is searched for based on the FLOPS, a target neural network may be found for a hardware platform. FLOPS of the target neural network on the hardware platform is low (for example, addition and multiplication calculation amounts of the target neural network are small). However, actually, running efficiency of the target neural network on the hardware platform is low (in other words, model overheads are high).

It can be learned that how to find, for a specific hardware platform, a target neural network that efficiently runs on the hardware platform has become an urgent problem to be resolved.

**SUMMARY**

According to an adaptive search method for a neural network provided in this application, a target neural network adaptive to a target hardware platform can be found on a premise of high search flexibility.

To achieve the foregoing objective, the following technical solutions are used in this application.

According to a first aspect, this application provides an adaptive search method for a neural network. The method may include: receiving a search condition set, where the search condition set includes target hardware platform information, network structure information of a source neural network, and one or more evaluation metrics, and the network structure information of the source neural network is used to represent the source neural network; performing a training process on a to-be-trained super network based on a training dataset, to obtain a trained super network, where the to-be-trained super network is obtained by extending a network structure of the source neural network; and performing a subnet search process on the trained super network based on the one or more evaluation metrics, to obtain network structure information of a target neural network, where the network structure information of the target neural network is used to represent the target neural network, and an evaluation result of the target neural network running on a target hardware platform is better than an evaluation result of the source neural network running on the target hardware platform.

There may be one or more target neural networks found in the trained super network. For example, a neural network with an optimal evaluation result is used as the target neural network based on the target hardware platform information and the one or more evaluation metrics. Alternatively, a plurality of better neural networks that are sorted first based on sorted evaluation results are used as the target neural network.

The target hardware platform includes a platform configured to carry a neural network. The obtained target hardware platform information may include, for example, attribute information (for example, a graphics processing unit (graphics processing unit, GPU), a host central processing unit (central processing unit, CPU), and a digital signal processor (digital signal processor, DSP)), a model, and a manufacturer of the hardware platform. In this way, different hardware platforms have different implementations and optimization statuses for different operators and/or operator sets, to implement adaptive search for a neural network.

The evaluation metric may also be referred to as a search condition, a constraint, or the like. The evaluation metric is used to ensure that a finally found neural network meets a requirement. For example, precision and time overheads of the found neural network need to meet requirements.

The network structure information of the neural network may include, for example, information about operators and/or operator sets included in the neural network, an arrangement manner of the operators and/or the operator sets (for example, a neural network with a tree structure or a neural network with a mesh structure), level information, and parameters of the operators and/or the operator sets.

In this way, in comparison with an existing FLOPS-based neural network search method, in the adaptive search method for a neural network provided in this application, a neural network is searched for in the trained super network based on the search condition set. The super network is obtained by extending the network structure of the source neural network. Therefore, the super network can cover or support different implementations of different hardware platforms for operators/channels. The search condition set may be flexibly set, and the search condition set includes at least the target hardware platform information. Therefore, according to the method provided in this application, the target neural network for the target hardware platform can be obtained through adaptive search on the premise of high search flexibility by considering different operators/channel overheads caused by the different implementations of the different hardware platforms for the operators/channels. A running effect of the target neural network on the target hardware platform is better than a running effect of the source neural network on the target hardware platform. For example, it is assumed that an operator A in the source neural network is that a $1 \times 1$ convolution algorithm requires 10 million multiplications, and an operator B is that a $3 \times 3$ convolution algorithm requires 15 million operations. When the source neural network runs on the target hardware platform, the operator A requires 2 $\mu$s, and the operator B requires 3 $\mu$s. When the operator A in the target neural network runs on the target hardware platform, the operator A requires 2 $\mu$s, and an operator B' (for example, an operator obtained after the operator B is optimized) requires only 1.5 $\mu$s.

In a possible implementation, the one or more evaluation metrics include any one or more of: a precision evaluation metric of a neural network model, a time overhead evaluation metric of the neural network model, a storage space evaluation metric of the neural network model, a power consumption evaluation metric of the neural network model, a utilization evaluation metric of a tensor calculation unit of the neural network model, and a memory read/write speed evaluation metric of the neural network model. The precision evaluation metric of the neural network model includes that precision of the target neural network is not less than a precision threshold. The time overhead evaluation metric of the neural network model includes that a time overhead of the target neural network is not greater than a time overhead threshold. The storage space evaluation metric of the neural network model includes that storage space occupied by the target neural network is not greater than a storage space threshold. The power consumption evaluation metric of the neural network model includes that power consumption of the target neural network is not greater than a power consumption threshold. The utilization evaluation metric of the tensor calculation unit of the neural network model includes that utilization of the tensor calculation unit of the target neural network is not less than a utilization threshold of the tensor calculation unit. The memory read/write speed evaluation metric of the neural network model includes that a memory read/write speed of the target neural network is not less than a memory read/write speed threshold.

In this way, a combination mode of the one or more evaluation metrics may be set based on factors such as different user requirements, different application scenarios, or different tasks. For example, a combination mode of evaluation metrics is determined based on a hardware metric of a hardware platform or different tasks of a neural network. For example, two evaluation metrics may be configured: the precision evaluation metric and the time overhead evaluation metric. In this case, both the precision threshold and the time overhead threshold need to be set. For example, in some scenarios, recognition results of a large quantity of images need to be obtained in a short time, but a precision requirement for image recognition is not high. In this case, a smaller precision threshold and a smaller time overhead threshold may be set, so that a recognition speed of a found target neural network is faster than that of the source neural network.

In a possible implementation, the performing a subnet search process on the trained super network based on the one or more evaluation metrics, to obtain network structure information of a target neural network includes: determining one or more to-be-evaluated candidate subnets in a target search range from the trained super network by using a first knowledge base; and performing the subnet search process on the one or more to-be-evaluated candidate subnets in the target search range based on the one or more evaluation metrics, to obtain the network structure information of the target neural network.

The first knowledge base may include, for example, expert priori knowledge. The first knowledge base includes a network receptive field constraint that is of a neural network and that is determined based on expert experience, an optimization status of an operator and/or an operator set for a specific hardware platform, and the like. For example, the optimization status may include: ($7 \times 7$ convolution operator + pooling) input to a specific hardware platform is optimized, so that although a calculation amount of ($7 \times 7$ convolution operator + pooling) is greater than a calculation amount of ($3 \times 3$ convolution operator + pooling) or ($5 \times 5$ convolution operator + pooling), a time overhead of ($7 \times 7$ convolution operator + pooling) on a current hardware platform is less than a time overhead of ($3 \times 3$ convolution operator + pooling) or ($5 \times 5$ convolution operator + pooling). In this way, it may be directly determined, based on the first knowledge base, that a neural network including lower time overheads ($7 \times 7$ convolution operator + pooling) is selected as a candidate subnet. This narrows the target search range and increases neural network search efficiency.

In this way, the target search range may be determined in the super network by using the first knowledge base and based on the target hardware platform information, and the subnet search process is performed in the target search range. This helps narrow a search range of search subnets, reduce a search time, and increase the neural network search efficiency.

In a possible implementation, the performing a subnet search process on the trained super network based on the one or more evaluation metrics, to obtain network structure information of a target neural network includes: obtaining information about a correspondence between the target hardware platform, network structures of M neural networks, N evaluation metrics, and P evaluation results, where M, N, and P are all positive integers, and the network structures of the M neural networks are included in a network structure of the trained super network; determining, based on the one or more evaluation metrics and the correspondence information, an evaluation result or evaluation results of one or more to-be-evaluated candidate subnets included in the trained super network; and performing the search process on the trained super network based on the evaluation result or the evaluation results of the one or more to-be-evaluated candidate subnets, to obtain the network structure information of the target neural network.

The M neural networks are subnets extracted from the trained super network, namely, to-be-evaluated candidate subnets. It is clear that, the network structures of the M neural networks are included in the network structure of the trained super network. When one candidate subnet runs on the target hardware platform, the candidate subnet corresponds to N evaluation results based on the N evaluation metrics. When M candidate subnets run on the target hardware platform, the M candidate subnets correspond to $M \times N$ evaluation results, namely, P evaluation results, based on the N evaluation metrics. Then, the one or more candidate subnets are determined as the target neural network based on the P evaluation results.

In this way, in a search process, when any one or more of the one or more evaluation metrics are selected, an evaluation result of a candidate subnet may be determined based on a correspondence, and then the network structure information of the target neural network may be determined.

For example, on a target hardware platform 1, an evaluation metric is precision, an evaluation result of a candidate subnet 1 is A, and an evaluation result of a candidate subnet 2 is B, where A is better than B. If there is one target neural network, the candidate subnet 1 is determined as the target neural network based on one or more evaluation metrics and correspondence information.

In a possible implementation, the one or more evaluation metrics include the time overhead evaluation metric of the neural network model, and the time overhead evaluation metric of the neural network model includes that the time overhead of the target neural network is not greater than the time overhead threshold; and correspondingly, the performing a subnet search process on the trained super network based on the one or more evaluation metrics includes: performing, based on the time overhead evaluation metric of the neural network model, subnet evaluation on one or more candidate subnets included in the trained super network, to obtain one or more target neural networks whose time overheads of the neural network model are less than the time overhead threshold.

For example, a neural network runs on a hardware platform, the hardware platform is configured to process an image, and an original processing speed is processing 100 images per second. Currently, the image processing speed of the hardware platform needs to be increased. For example, to enable an image processing speed of an optimized neural network on the hardware platform to reach 150 images per second, a time overhead evaluation metric may be set, and a time overhead threshold is used to ensure that an image processing speed of a found target neural network can meet a requirement.

In a possible implementation, the method further includes: constructing the to-be-trained super network in a horizontal extension mode and/or a vertical extension mode based on the network structure of the source neural network, an extension rule in a second knowledge base, and the target hardware platform information.

The second knowledge base may be the same as or different from the first knowledge base. The extension rule in the second knowledge base includes that operator sets (namely, first operator sets below) in the source neural network and replaceable operator sets (namely, derived second operator sets below) corresponding to the operator sets have different correspondences based on different hardware platforms. It may be understood that an operator set in the source neural network and a corresponding replaceable operator set have a same or similar function. The correspondence includes a correspondence between an operator set in the source neural network based on the target hardware platform and a replaceable operator set. In addition, the correspondence is established based on experimental data, expert priori knowledge, and a design status of the target hardware platform. In this way, the extension rule may be used to limit a network scale of the super network. For example, if an operator set in the source neural network has a poor running effect on the target hardware platform, the operator set may be replaced (not retained) based on the second knowledge base, to reduce a network scale of a generated super network.

The horizontal extension mode includes extending, based on the network structure information of the source neural network, an operator set included at one level of the source neural network to one or more operator sets included at one level of the super network. The vertical extension mode includes vertically extending, based on the network structure information of the source neural network, one level in the source neural network to a plurality of levels, and then correspondingly obtaining, based on operator sets included in the plurality of levels obtained after vertical extension, a plurality of operator sets included in a plurality of levels of the super network.

A function of an obtained operator set included in the to-be-trained super network is the same as that of a corresponding operator set in the source neural network, so that the target neural network found in the super network can execute a task of the source neural network, for example, an image classification task in image recognition.

In a possible implementation, third operator sets in the to-be-trained super network include first operator sets and/or derived second operator sets, where the first operator sets are included in the source neural network.

Each third operator set in the super network may correspond to one level of the source neural network, and a second operator set may be derived from a first operator set at each level based on the knowledge base. In this case, the third operator set includes the first operator set and the derived second operator set. Alternatively, it is determined, based on the knowledge base, that a derived second operator set at a level may replace the first operator set, so that the corresponding third operator set includes only the derived second operator set. Certainly, it may alternatively be determined, based on the knowledge base, that no derived second operator set exists at a level, and the corresponding third operator set includes only the first operator set.

In a possible implementation, the determining, based on the one or more evaluation metrics and the correspondence information, an evaluation result or evaluation results of one or more to-be-evaluated candidate subnets included in the trained super network includes: determining, based on the one or more evaluation metrics and the correspondence information, evaluation results corresponding to first operator sets and/or derived second operator sets in third operator sets in the trained super network, where the first operator sets are included in the source neural network; and obtaining the evaluation result or the evaluation results of the one or more to-be-evaluated candidate subnets based on a proportional relationship between the N evaluation metrics and based on the evaluation results corresponding to the first operator sets and/or the derived second operator sets in the third operator sets.

The proportional relationship may be determined based on a target task executed by the target hardware platform, an attribute of the target hardware platform, or the like. It may be understood that the proportional relationship between the N evaluation metrics reflects relative importance between the N evaluation metrics. It is clear that, an evaluation effect of a found target neural network on the target hardware platform is better based on an evaluation metric with a higher proportion. For example, evaluation metrics include precision and a time overhead. The target hardware platform is a hardware platform configured to process a suburban video surveillance image. A surveillance image collected per unit time includes a small amount of information, and high image processing precision needs to be ensured. However, a low processing speed is required. Therefore, a high precision proportion may be set in the proportional relationship. In this way, a candidate subnet with better running performance on the target hardware platform may be obtained based on the proportional relationship and an evaluation result, so that a better target neural network may be found.

In a possible implementation, the obtaining the evaluation result or the evaluation results of the one or more to-be-evaluated candidate subnets based on a proportional relationship between the N evaluation metrics and based on the evaluation results corresponding to the first operator sets and/or the derived second operator sets in the third operator sets includes: receiving r proportional relationships between the N evaluation metrics, and performing pre-search for each proportional relationship between the N evaluation metrics, where r is a positive integer; in one pre-search process, setting weights of the evaluation results of the first operator sets and/or the derived second operator sets, and retraining the trained super network based on the N evaluation metrics and the proportional relationship between the N evaluation metrics; and in the training process, adjusting the weights corresponding to the evaluation results of the first operator sets and the derived second operator sets; determining a to-be-evaluated candidate subnet and an evaluation result of the to-be-evaluated candidate subnet based on adjusted weights corresponding to the evaluation results of the first operator sets and the derived second operator sets; and determining the evaluation result or the evaluation results of the one or more to-be-evaluated candidate subnets based on r pre-search processes.

The pre-search process is to narrow a target search range. A part of candidate subnets are first determined based on different proportional relationships, and then the determined part of candidate subnets are evaluated based on the one or more evaluation metrics, to determine the network structure information of the target neural network.

In the pre-search process, a weight proportion is adjusted to determine a first operator set or a derived second operator set that is in each third operator set and that is relatively applicable to the target hardware platform. In this way, in each pre-search process, based on a current proportional relationship, a candidate subnet with optimal performance and an evaluation result of the candidate subnet may be determined. Then, a plurality of candidate subnets may be obtained based on a plurality of proportional relationships. In this way, the target neural network may be determined from the plurality of candidate subnets, to determine the network structure information of the target neural network.

In a possible implementation, the N evaluation metrics include the precision evaluation metric of the neural network model and the time overhead evaluation metric of the neural network model; and correspondingly, the proportional relationship between the N evaluation metrics includes a proportional relationship between the precision evaluation metric and the time overhead evaluation metric.

For example, a user inputs a first proportion and a second proportion between the precision evaluation metric and the time overhead evaluation metric. In this way, it can be ensured that the precision of the target neural network is not less than precision of the source neural network, or is not greatly different from precision of the source neural network. In addition, time overheads are reduced while the precision of the target neural network is ensured, in other words, a running speed of the target neural network on the target hardware platform is increased, thereby improving working efficiency.

In a possible implementation, the performing the search process on the trained super network based on the evaluation result or the evaluation results of the one or more to-be-evaluated candidate subnets, to obtain the network structure information of the target neural network further includes: sorting the evaluation result or the evaluation results of the one or more to-be-evaluated candidate subnets, to obtain K first target candidate subnets corresponding to first K evaluation results; obtaining S second target candidate subnets obtained after an $n^{th}$ round of hybridization and/or mutation based on the trained super network and the K first target candidate subnets, where n is a preset quantity of screening times, $n \geq 1$, K and S are positive integers, and $S > K$; obtaining evaluation results of the S second target candidate subnets based on the one or more evaluation metrics and the correspondence information, and sorting the evaluation results, to obtain K second target candidate subnets corresponding to first K evaluation results; and obtaining network structure information of one or more target neural networks from $K \times (n + 1)$ target candidate subnets.

In this application, the hybridization means that a part of operator sets included at corresponding levels in a part of the K first target candidate subnets are exchanged, to obtain the second target candidate subnets. The mutation means that a part of operator sets included in a part of the K first target candidate subnets are replaced with a part of operator sets at corresponding levels in the trained super network, to obtain the second target candidate subnets.

For example, after (n + 1) rounds of iterative training, to be specific, after n rounds of hybridization and/or mutation, the $K \times (n + 1)$ target candidate subnets are obtained. The $K \times (n + 1)$ target candidate subnets may be sorted again based on the one or more evaluation metrics, to obtain the network structure information of the one or more target neural networks.

In this way, the evaluation result or the evaluation results of the one or more to-be-evaluated candidate subnets is/are first sorted to obtain a part of better candidate subnets, so that a target search range is narrowed. Then, more candidate subnets are generated based on the part of better candidate subnets by using a hybridization and/or mutation method. In an iterative process, a part of better candidate subnets in each iterative process are obtained, and one or more target subnets that meet the one or more evaluation metrics and have better performance are determined from the candidate subnets.

In a possible implementation, the source neural network is a neural network running on a source hardware platform, or the target neural network is a neural network running on the target hardware platform; and the source hardware platform is different from the target hardware platform.

The source hardware platform is a hardware platform different from the target hardware platform, and the source hardware platform and the target hardware platform include processors with different attributes, or processors with different models, or processors with a same attribute but different models. The source hardware platform is replaced with the target hardware platform. The target neural network that needs to be used for the target hardware platform is searched for based on the source neural network running on the source hardware platform.

For example, the source neural network is a neural network 1 running on the GPU, and now the GPU needs to be switched to a chip A. In this case, the target neural network needs to be searched for based on the neural network 1 and the chip A. A running effect of the target neural network on the chip A is better than a running effect of the neural network 1 on the chip A.

In a possible implementation, the source neural network and the target neural network are neural networks running on the target hardware platform in different time domains.

For example, the source neural network is a neural network 1 running on the GPU, and now an image processing speed of the GPU needs to be increased. In this case, the neural network 1 needs to be optimized, and a found target neural network is an optimized neural network 1. The neural network 1 and the target neural network sequentially run, or are carried on the GPU (the target hardware platform).

In a possible implementation, the method further includes: constructing the target neural network based on the network structure information of the target neural network; and performing a training process on the target neural network based on a second training dataset, to obtain a trained target neural network.

The second training dataset may be a training dataset that is the same as or different from the first training dataset, and is used to participate in a training process of a neural network. The network structure information of the target neural network is found by using the foregoing method, so that the target neural network can be constructed. The target neural network is trained by using the training dataset, and parameter information in the target neural network is adjusted, to obtain a neural network that can run on the target hardware platform to execute the target task.

In a possible implementation, the trained target neural network runs on the target hardware platform, to perform a target detection task and an image classification task.

In this way, the obtained trained target neural network can execute the target task on the target hardware platform. For example, a traffic light recognition task, a pedestrian and vehicle detection task, and the like can be executed. In addition, the trained target neural network has a better running effect on the target hardware platform. For example, a time overhead of executing the traffic light recognition task on the target hardware platform by the source neural network is 0.2 ms, and a time overhead of executing the traffic light recognition task on the target hardware platform by the trained target neural network is 0.1 ms. The time overhead is reduced by 50% while it is ensured that precision basically remains unchanged.

According to a second aspect, this application provides an adaptive search apparatus for a neural network. The apparatus may include a receiving unit, a training unit, and a search unit. The receiving unit is configured to receive a search condition set, where the search condition set includes target hardware platform information, network structure information of a source neural network, and one or more evaluation metrics, and the network structure information of the source neural network is used to represent the source neural network. The training unit is configured to perform a training process on a to-be-trained super network based on a training dataset, to obtain a trained super network, where the to-be-trained super network is obtained by extending a network structure of the source neural network. The search unit is configured to perform a subnet search process on the trained super network based on the one or more evaluation metrics, to obtain network structure information of a target neural network, where the network structure information of the target neural network is used to represent the target neural network, and an evaluation result of the target neural network running on a target hardware platform is better than an evaluation result of the source neural network running on a source hardware platform.

In a possible implementation, the one or more evaluation metrics include any one or more of: a precision evaluation metric of a neural network model, a time overhead evaluation metric of the neural network model, a storage space evaluation metric of the neural network model, a power consumption evaluation metric of the neural network model, a utilization evaluation metric of a tensor calculation unit of the neural network model, and a memory read/write speed evaluation metric of the neural network model. The precision evaluation metric of the neural network model includes that precision of the target neural network is not less than a precision threshold. The time overhead evaluation metric of the neural network model includes that a time overhead of the target neural network is not greater than a time overhead threshold. The storage space evaluation metric of the neural network model includes that storage space occupied by the target neural network is not greater than a storage space threshold. The power consumption evaluation metric of the neural network model includes that power consumption of the target neural network is not greater than a power consumption threshold. The utilization evaluation metric of the tensor calculation unit of the neural network model includes that utilization of the tensor calculation unit of the target neural network is not less than a utilization threshold of the tensor calculation unit. The memory read/write speed evaluation metric of the neural network model includes that a memory read/write speed of the target neural network is not less than a memory read/write speed threshold.

In a possible implementation, the search unit is specifically configured to: determine one or more to-be-evaluated candidate subnets in a target search range from the trained super network by using a first knowledge base; and perform the subnet search process on the one or more to-be-evaluated candidate subnets in the target search range based on the one or more evaluation metrics, to obtain the network structure information of the target neural network.

In a possible implementation, the search unit is specifically configured to: obtain information about a correspondence between the target hardware platform, network structures of M neural networks, N evaluation metrics, and P evaluation results, where M, N, and P are all positive integers, and the network structures of the M neural networks are included in a network structure of the trained super network; determine, based on the one or more evaluation metrics and the correspondence information, an evaluation result or evaluation results of one or more to-be-evaluated candidate subnets included in the trained super network; and perform a search process on the trained super network based on the evaluation result or the evaluation results of the one or more to-be-evaluated candidate subnets, to obtain the network structure information of the target neural network.

In a possible implementation, the one or more evaluation metrics include the time overhead evaluation metric of the neural network model, and the time overhead evaluation metric of the neural network model includes that the time overhead of the target neural network is not greater than the time overhead threshold. Correspondingly, the search unit is specifically configured to perform, based on the time overhead evaluation metric of the neural network model, subnet evaluation on one or more candidate subnets included in the trained super network, to obtain one or more target neural networks whose time overheads of the neural network model are less than the time overhead threshold.

In a possible implementation, the apparatus further includes a construction unit, configured to construct the to-be-trained super network in a horizontal extension mode and/or a vertical extension mode based on the network structure of the source neural network, an extension rule in a second knowledge base, and the target hardware platform information.

In a possible implementation, third operator sets in the to-be-trained super network include first operator sets and/or derived second operator sets, where the first operator sets are included in the source neural network.

In a possible implementation, the search unit is specifically configured to: determine, based on the one or more evaluation metrics and the correspondence information, evaluation results corresponding to first operator sets and/or derived second operator sets in third operator sets in the trained super network, where the first operator sets are included in the source neural network; obtain the evaluation result or the evaluation results of the one or more to-be-evaluated candidate subnets based on a proportional relationship between the N evaluation metrics and based on the evaluation results corresponding to the first operator sets and/or the derived second operator sets in the third operator sets; and perform a search process on the trained super network based on the evaluation result or the evaluation results of the one or more to-be-evaluated candidate subnets, to obtain the network structure information of the target neural network.

In a possible implementation, the search unit is specifically configured to: receive r proportional relationships between the N evaluation metrics, and perform pre-search for each proportional relationship between the N evaluation metrics, where r is a positive integer; in one pre-search process, set weights of evaluation results of first operator sets and/or derived second operator sets, and retrain the trained super network based on the N evaluation metrics and the proportional relationship between the N evaluation metrics; in a training process, adjust the weights corresponding to the evaluation results of the first operator sets and the derived second operator sets; determine a to-be-evaluated candidate subnet and an evaluation result of the to-be-evaluated candidate subnet based on adjusted weights corresponding to the evaluation results of the first operator sets and the derived second operator sets; and determine the evaluation result or the evaluation results of the one or more to-be-evaluated candidate subnets based on r pre-search processes.

In a possible implementation, the N evaluation metrics include the precision evaluation metric of the neural network model and the time overhead evaluation metric of the neural network model; and correspondingly, the proportional relationship between the N evaluation metrics includes a proportional relationship between the precision evaluation metric and the time overhead evaluation metric.

In a possible implementation, the search unit is specifically configured to: sort the evaluation results of the one or more to-be-evaluated candidate subnets, to obtain K first target candidate subnets corresponding to first K evaluation results; obtain S second target candidate subnets obtained after an $n^{th}$ round of hybridization and/or mutation based on the trained super network and the K first target candidate subnets, where n is a preset quantity of screening times, $n \geq 1$, K and S are positive integers, and $S > K$; obtain and sort evaluation results of the S second target candidate subnets based on the one or more evaluation metrics and the correspondence information, to obtain K second target candidate subnets corresponding to first K evaluation results; and obtain network structure information of one or more target neural networks from $K \times (n + 1)$ target candidate subnets.

In a possible implementation, the source neural network is a neural network running on a source hardware platform, or the target neural network is a neural network running on the target hardware platform, and the source hardware platform is different from the target hardware platform.

In a possible implementation, the source neural network and the target neural network are neural networks running on the target hardware platform in different time domains.

In a possible implementation, the construction unit is further configured to construct the target neural network based on the network structure information of the target neural network. The training unit is further configured to perform a training process on the target neural network based on a second training dataset, to obtain a trained target neural network.

In a possible implementation, the trained target neural network runs on the target hardware platform, to perform a target detection task and an image classification task.

According to a third aspect, this application provides a server. The server may include one or more processors, a memory, and one or more computer programs. The one or more computer programs are stored in the memory, and the one or more computer programs include instructions. When the instructions are executed by the server, the server is enabled to perform the adaptive search method for a neural network according to any one of the first aspect and the possible implementations of the first aspect.

According to a fourth aspect, this application provides an apparatus. The apparatus has a function of implementing the adaptive search method for a neural network according to any one of the first aspect and the possible implementations of the first aspect. The function may be implemented by hardware, or may be implemented by hardware executing corresponding software. The hardware or the software includes one or more modules corresponding to the function.

According to a fifth aspect, this application provides a computer-readable storage medium, including computer instructions. When the computer instructions are run on a server, the server is enabled to perform the adaptive search method for a neural network according to any one of the first aspect and the possible implementations of the first aspect.

According to a sixth aspect, this application provides a computer program product. When the computer program product runs on a server, the server is enabled to perform the adaptive search method for a neural network according to any one of the first aspect and the possible implementations of the first aspect.

According to a seventh aspect, a circuit system is provided, where the circuit system includes a processing circuit, and the processing circuit is configured to perform the adaptive search method for a neural network according to any one of the first aspect and the possible implementations of the first aspect.

According to an eighth aspect, an embodiment of this application provides a communication system, including at least one server and at least one terminal device. The at least one server performs the adaptive search method for a neural network according to any one of the first aspect and the possible implementations of the first aspect. The at least one terminal device sends a search condition set to the at least one server, where the search condition set includes target hardware platform information, network structure information of a source neural network, and one or more evaluation metrics, and the network structure information of the source neural network is used to represent the source neural network. The at least one terminal device receives a trained target neural network sent by the at least one server.

In a possible implementation, the at least one terminal device is further configured to determine whether to send the trained target neural network to user equipment including a target hardware platform.

## BRIEF DESCRIPTION OF DRAWINGS

FIG. 1 is a schematic diagram of an application scenario of an adaptive search method for a neural network according to an embodiment of this application;

FIG. 2 is a schematic diagram of a system architecture according to an embodiment of this application;

FIG. 3 is a schematic diagram of a hardware structure of a chip according to an embodiment of this application;

FIG. 4 is a schematic flowchart 1 of an adaptive search method for a neural network according to an embodiment of this application;

FIG. 5 is a schematic diagram 1 of a network structure of a source neural network according to an embodiment of this application;

FIG. 6 is a schematic diagram 2 of a network structure of a source neural network according to an embodiment of this application;

FIG. 7 is a schematic diagram 1 of a super network construction process according to an embodiment of this application;

FIG. 8 is a schematic diagram 2 of a super network construction process according to an embodiment of this application;

FIG. 9 is a schematic diagram of a network structure of a super network according to an embodiment of this application;

FIG. 10 is a schematic flowchart 2 of an adaptive search method for a neural network according to an embodiment of this application;

FIG. 11(a) to FIG. 11(c) is a schematic diagram of a process of obtaining a to-be-evaluated candidate subnet according to an embodiment of this application;

FIG. 12(a) to FIG. 12(c) is a schematic diagram of a process of obtaining a target candidate subnet according to an embodiment of this application;

FIG. 13 is a schematic flowchart 3 of an adaptive search method for a neural network according to an embodiment of this application;

FIG. 14 is a schematic diagram of a structure of an apparatus according to an embodiment of this application; and

FIG. 15 is a schematic diagram of a hardware structure of an apparatus according to an embodiment of this application.

## DESCRIPTION OF EMBODIMENTS

The following describes in detail an adaptive search method and apparatus for a neural network provided in embodiments of this application with reference to accompanying drawings.

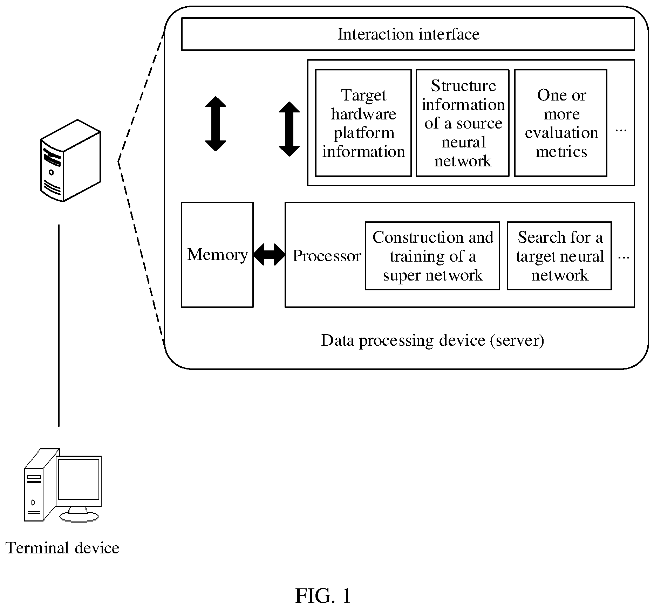

FIG. 1 shows an adaptive search system for a neural network. The adaptive search system for a neural network includes a data processing device and a terminal device. The data processing device and the terminal device may be connected via a wired network or a wireless network. A manner of connection between the devices is not specifically limited in this embodiment of this application.

The terminal device is a client device, may be a terminal device operated by a developer, and provides a related human-machine interaction interface, so that a user inputs a related parameter required in an adaptive search process for a neural network, for example, a search condition set. For example, the search condition set may include target hardware platform information (for example, a manufacturer, an attribute, a model, and a type of a to-be-executed target task of a target hardware platform), network structure information of a source neural network, and one or more evaluation metrics (for example, a precision threshold, a time overhead threshold, and a storage space threshold). For example, the terminal device may be a terminal device such as a desktop computer, a laptop computer, a handheld computer, or a notebook computer. A specific form of the terminal device is not specifically limited in this embodiment of this application.

The hardware platform may include, for example, one or more of the following: a graphics processing unit (graphics processing unit, GPU), a host central processing unit (central processing unit, CPU), an image signal processor (image signal processor, ISP), a neural network processing unit (neural network processing unit, NPU), a digital signal processor (digital signal processor, DSP), and the like. Applications that can be implemented by a running or carried neural network include but are not limited to computer vision applications such as image classification (image classification), object recognition (object recognition), action recognition (action recognition), pose estimation (pose estimation), and neural style transfer (neural style transfer), or may be natural language processing (natural language processing, NLP) applications, or the like.

In a scenario, when a neural network (namely, the source neural network) in the terminal device needs to be optimized, the terminal device may input the network structure information of the source neural network, information about a specific hardware platform (namely, the target hardware platform) on which the source neural network is carried, and the like to the data processing device for processing, to obtain an optimized neural network (namely, a target neural network). That is, the source neural network and the target neural network are neural networks running on a same hardware platform in different time domains.

In another scenario, when a hardware platform of the source neural network in the terminal device is replaced with another hardware platform (including a hardware platform with a different attribute (for example, the GPU, the CPU, the NPU, or the DSP), a hardware platform with a same attribute but a different model, or a hardware platform with a same attribute but a different manufacturer), the network structure information of the source neural network and information about a hardware platform after replacement (namely, the target hardware platform) may be input to the data processing device for processing, to obtain a neural network obtained through adaptive search (namely, the target neural network). Because a design of the hardware platform after replacement (namely, the target hardware platform) may be different from that of the source hardware platform, a running effect of the source neural network is affected. Alternatively, some designs in the hardware platform after replacement may not be fully applied to the source neural network, and consequently, network performance deteriorates, and a design waste of the hardware platform is caused.

It may be understood that, in some other examples, the adaptive search system for a neural network may further include user equipment. The terminal device may further determine whether to send obtained network structure information of the target neural network to user equipment including the target hardware platform, so that the target neural network runs or is carried on the corresponding target hardware platform in the user equipment to execute a task. For example, the user equipment may be a terminal device such as a mobile phone (mobile phone), a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR)/virtual reality (virtual reality, VR) device, or an artificial intelligence (artificial intelligence, AI) terminal. A specific form of the user equipment is not specially limited in this embodiment of this disclosure.

The data processing device may be a device or server that has a neural network search function, for example, a cloud server or a network server. The data processing device receives, through an interaction interface, the search condition set sent by the terminal device, where the search condition set includes the target hardware platform information, the network structure information of the source neural network, the one or more evaluation metrics, and the like; then constructs and trains a super network based on a knowledge base stored in a memory and by using a processor, and searches the target neural network; and sends a search result, namely, the target neural network, to the corresponding terminal device. The memory in the data processing device may be a general name, and includes a local storage and a database storing historical data. The database may be located on the data processing device, or may be located on another cloud server.

It should be noted that the data processing device may be a server, or may be a server cluster including a plurality of servers, or may be a cloud computing service center.

For example, the data processing device in FIG. 1 may perform the adaptive search method for a neural network in the embodiments of this application.

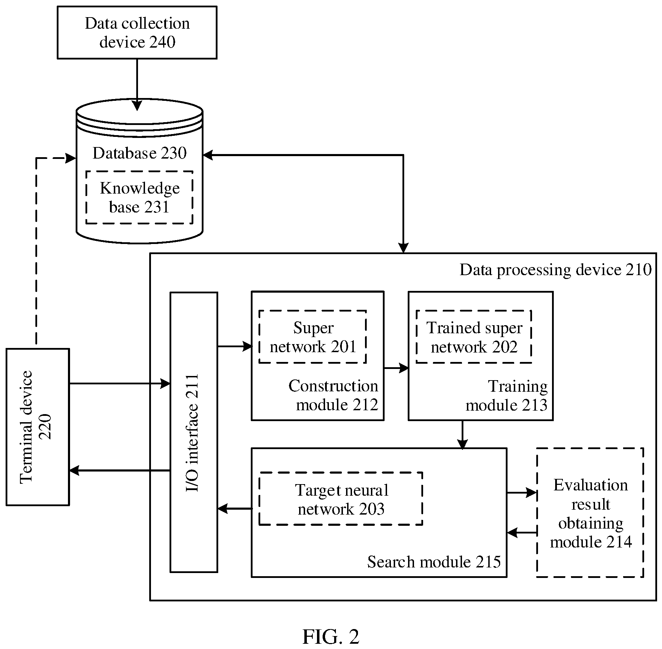

FIG. 2 shows an example of a system architecture according to an embodiment of this application.

As shown in the system architecture in FIG. 2, an input/output (input/output, I/O) interface 211 is configured for a data processing device 210, and is configured to exchange data with an external device. A user may input data to the I/O interface 211 by using a terminal device 220. The input data may include a search condition set in embodiments of this application. For example, the search condition set may include target hardware platform information (for example, a manufacturer, an attribute, a model, and a type of a to-be-executed target task of a target hardware platform), network structure information of a source neural network, and one or more evaluation metrics (for example, a precision threshold, a time overhead threshold, and a storage space threshold).

A data collection device 240 is configured to collect training data. For example, the training data in this embodiment of this application may be a training dataset for training a neural network. After collecting the training data, the data collection device 240 stores the training data in a database 230. The database 230 further stores a knowledge base 231 collected by the data collection device 240. The knowledge base 231 may be used to construct a super network based on the source neural network. The knowledge base 231 may include information about matching between an operator and/or an operator set in a neural network and a hardware platform. For example, the knowledge base 231 includes correspondences that are between a first operator set and a third operator set and that are based on different hardware platforms. The third operator set includes the first operator set and/or one or more derived second operator sets. Each derived second operator set has a same function as a first operator set corresponding to the derived second operator set. In other words, the first operator set may be replaced with a derived second operator set. In this case, when the source neural network is extended to the super network by using the knowledge base 231, each first operator set included in the source neural network is replaced with a third operator set corresponding to the first operator set. As shown in the following Table 1, an example of the knowledge base 231 is provided.

**Table 1**

| | Target hardware platform | First operator set | Third operator set |
|---|---|---|---|
| 1 | GPU whose model is A | $3 \times 3$ convolution operator | $3 \times 3$ convolution operator, $1 \times 1$ convolution operator, and $5 \times 5$ convolution operator |
| 2 | CPU whose model is B | $7 \times 7$ convolution operator + pooling layer operator when stride = 1 | $7 \times 7$ convolution operator when stride = 2 |
| 3 | NPU whose model is C | $7 \times 7$ convolution operator | $3 \times 3$ convolution operator + $3 \times 3$ convolution operator + $3 \times 3$ convolution operator |

It can be learned that the first operator set may include one or more operators. Each first operator set may correspond to one or more derived second operator sets. The one or more derived second operator sets and/or the first operator set constitute/constitutes the third operator set corresponding to the first operator set.

For example, in Table 1, a first operator set included in the source neural network is the $3 \times 3$ convolution operator. It is learned, based on the knowledge base 231, that on the GPU whose model is A (a target hardware platform), both the $1 \times 1$ convolution operator and the $5 \times 5$ convolution operator have a same or similar function as the $3 \times 3$ convolution operator. In this case, a derived second operator set includes the $1 \times 1$ convolution operator and the $5 \times 5$ convolution operator. A corresponding third operator set in the super network includes the first operator set (the $3 \times 3$ convolution operator) and the derived second operator set (the $1 \times 1$ convolution operator and the $5 \times 5$ convolution operator).

For another example, in Table 1, a first operator set included in the source neural network includes the $7 \times 7$ convolution operator + pooling layer operator when stride (stride) = 1. It is learned, based on the knowledge base 231, that on the CPU whose model is B (a target hardware platform), the $7 \times 7$ convolution operator when stride = 2 has a same or similar function as the $7 \times 7$ convolution operator + pooling layer operator when stride = 1. In this case, a derived second operator set includes the $7 \times 7$ convolution operator when stride = 2. In addition, an evaluation result of the derived second operator set is better than that of the first operator set, and the first operator set may be replaced with the derived second operator set. A corresponding third operator set in the super network includes the derived second operator set (the $7 \times 7$ convolution operator).

For another example, in Table 1, a first operator set included in the source neural network includes the $7 \times 7$ convolution operator. It is learned, based on the knowledge base 231, that on the NPU whose model is C (a target hardware platform), three $3 \times 3$ convolution operators may have a same or similar function as one $7 \times 7$ convolution operator. In this case, a derived second operator set includes the $3 \times 3$ convolution operator + $3 \times 3$ convolution operator + $3 \times 3$ convolution operator, and a result of the derived second operator set is better than that of the first operator set. A corresponding third operator set in the super network includes the derived second operator set ($3 \times 3$ convolution operator + $3 \times 3$ convolution operator + $3 \times 3$ convolution operator).

It should be noted that "+" between the operators in Table 1 is used to indicate that operator sets at adjacent levels are combined, in other words, operator sets vertically distributed are combined.

It should be noted that, when the knowledge base 231 is established, correspondences between first operator sets and derived second operator sets may be determined based on data of operator sets that actually runs on different hardware platforms or running statuses that are of operator sets and that are predicted based on expert priori knowledge. Certainly, the knowledge base may alternatively be updated based on upgrade statuses of different hardware platforms.

A method for establishing the knowledge base 231 is not specifically limited in this embodiment of this application.

It should be noted that, in actual application, the training data maintained in the database 230 may not all be collected by the data collection device 240, or may be received and obtained from another device. For example, information that is sent by the terminal device 220 and that is used to extend the knowledge base 231 is received.

A construction module 212 is configured to construct a super network 201. Specifically, the construction module 212 constructs, based on the network structure information of the source neural network in the search condition set and by using the knowledge base 231 obtained from the database 230, the super network 201 extended from the source neural network.

The training module 213 is configured to train the super network 201 to obtain a trained super network 202. Specifically, the super network 201 sent by the construction module 212 is received, and the super network 201 is trained based on the training dataset obtained from the database 230. The trained super network 202 is sent to a search module 215 to perform a neural network search process.

An evaluation result obtaining module 214 is configured to: obtain, based on the one or more evaluation metrics, evaluation results of first operator sets and/or derived second operator sets on the target hardware platform; and obtain evaluation results of candidate subnets found by the search module 215 on the target hardware platform.

The search module 215 is configured to search for a target neural network 203. Specifically, the trained super network 202 sent by the training module 213 is received, and the trained super network 202 is searched for the target neural network 203 based on the neural network evaluation results obtained by the evaluation result obtaining module 214. In addition, the target neural network 203 is output to the terminal device 220 through the I/O interface 211.

It should be further noted that FIG. 2 is merely a schematic diagram of the system architecture according to this embodiment of this application. A location relationship between devices, components, modules, and the like shown in the figure does not constitute any limitation. For example, in FIG. 2, the database 230 is an external memory relative to the data processing device 210, and in another case, the database 230 may alternatively be placed in the data processing device 210.

Because embodiments of this application relate to massive application of a neural network, for ease of understanding, the following describes terms and concepts related to the neural network that may be used in the embodiments of this application.

(1) Neural network

The neural network may include a neuron. The neuron may be an operation unit that uses $x_s$ and an intercept of 1 as input. Output of the operation unit may be as follows:

$$h_{W,b}\left(x\right) = f\left(W^T x\right) = f(\sum_{s=1}^{n} W_s x_s + b),$$

where

s = 1, 2, ..., or n, n is a natural number greater than 1, $W_s$ indicates a weight of $x_s$, b indicates a bias of the neuron, and f indicates an activation function (activation function) of the neuron. The activation function is used for introducing a non-linear characteristic into the neural network, to convert an input signal in the neuron into an output signal. The output signal of the activation function may be used as an input to a next convolutional layer, and the activation function may be a sigmoid function. The neural network is a network constituted by connecting a plurality of single neurons together. To be specific, an output of a neuron may be an input to another neuron. An input to each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having a plurality of hidden layers. The DNN is divided based on positions of different layers. Neural networks inside the DNN may be classified into three types: an input layer, a hidden layer, and an output layer. Generally, a first layer is the input layer, a last layer is the output layer, and a middle layer is the hidden layer. Layers are fully connected. To be specific, any neuron in an $i^{th}$ layer is necessarily connected to any neuron in an $(i + 1)^{th}$ layer.

Although the DNN seems complex, work of each layer is actually not complex. It can be simply expressed by the following linear relational expression: $\vec{y} = \alpha(W \cdot \vec{x} + \vec{b})$. $\vec{x}$ represents an input vector, $\vec{y}$ represents an output vector, $\vec{b}$ represents a bias vector, $W$ represents a weight matrix (which is also referred to as a coefficient), and $\alpha(\ )$ represents an activation function. At each layer, only such a simple operation is performed on the input vector $\vec{x}$ to obtain the output

vector $\vec{y}$. Because there are a large quantity of DNN layers, there are also a large quantity of coefficients $W$ and bias vectors $\vec{b}$. These parameters are defined in the DNN as follows: The coefficient $W$ is used as an example. It is assumed that in a three-layer DNN, a linear coefficient from a fourth neuron at a second layer to a second neuron at a third layer is defined as $W_{24}^{3}$. A superscript 3 indicates an ordinal number of a layer at which the coefficient $W$ is located, and a subscript corresponds to an index 2 of the third layer for output and an index 4 of the second layer for input.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that the input layer has no parameter $W$. In the deep neural network, more hidden layers allow the network to better describe a complex case in the real world. Theoretically, a model with more parameters has higher complexity and a larger "capacity". It indicates that the model can complete a more complex learning task. Training of the deep neural network is a process of learning a weight matrix, and a final objective of the training is to obtain a weight matrix of all layers of a trained deep neural network (a weight matrix formed by vectors $W$ of many layers).

(3) Loss function

In a process of training a deep neural network, because it is expected that an output of the deep neural network is as close as possible to a value that is actually expected to be predicted, a predicted value of a current network and a target value that is actually expected may be compared, and then, a weight vector of each layer of the neural network is updated based on a difference between the two (certainly, there is usually an initialization process before the first update, to be specific, a parameter is preconfigured for each layer in the deep neural network). For example, if the predicted value of the network is higher, the weight vector is adjusted to obtain a lower predicted value. The weight vector is continuously adjusted until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network becomes a process of reducing the loss as much as possible.

(4) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until an error loss occurs during output, and the parameters in the initial neural network model are updated based on back propagation error loss information, so that the error loss is reduced. The back propagation algorithm is a back propagation motion mainly dependent on the error loss, and aims to obtain parameters of an optimal neural network model, for example, a weight matrix.

In the technical solutions provided in the embodiments of this application, a part of operators and/or operator sets may be retained or replaced based on a specific structure of a convolutional neural network model and in combination with functions and evaluation results of operators and/or operator sets at layers included in a hidden layer of the source neural network, to obtain a target neural network that more matches the target hardware platform.

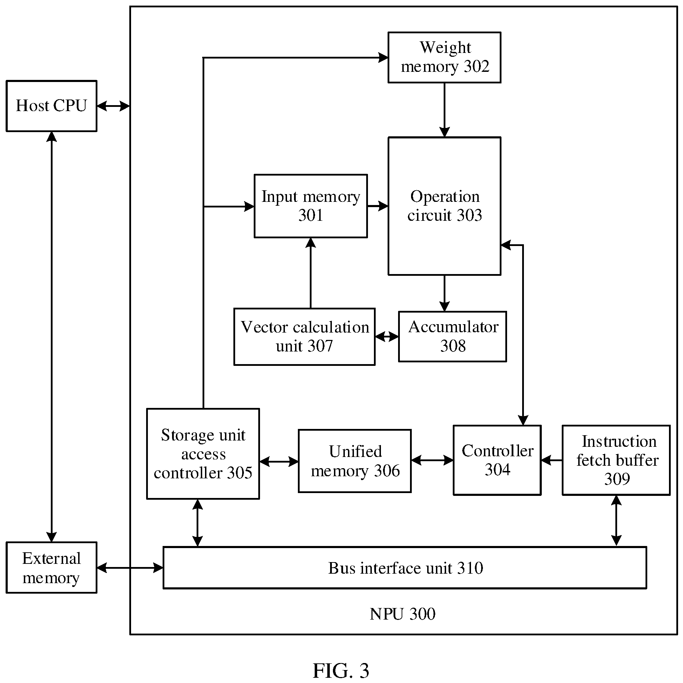

FIG. 3 shows a hardware structure of a chip according to an embodiment of this application. The chip includes a neural network processing unit (neural network processing unit, NPU) 300. The chip may be disposed in the data processing device 210 shown in FIG. 2, and is configured to complete all or a part of work (for example, construct the super network 201) of the construction module 212 in FIG. 2, or may be configured to complete all or a part of work (for example, train the super network 201) of the training module 213, or may be configured to complete all or a part of work (for example, search for the target neural network 203) of the search module 215, or may be configured to complete all or part of work (for example, evaluate the searched neural network based on the one or more evaluation metrics) of the evaluation result obtaining module 214.

The neural network processing unit NPU 300 serves as a coprocessor, and may be disposed on a host central processing unit (central processing unit, CPU) (host CPU). The host CPU assigns a task. A core part of the NPU 300 is an operation circuit 303, and a controller 304 controls the operation circuit 303 to extract data in a memory (a weight memory or an input memory) and perform an operation.

In some implementations, the operation circuit 303 internally includes a plurality of processing units (process engines, PEs). In some implementations, the operation circuit 303 is a two-dimensional systolic array. The operation circuit 303 may alternatively be a one-dimensional systolic array or another electronic circuit that can perform mathematical operations such as multiplication and addition. In some implementations, the operation circuit 303 is a general-purpose matrix processor.

For example, it is assumed that there are an input matrix A, a weight matrix B, and an output matrix C. The operation circuit 303 fetches, from a weight memory 302, data corresponding to the matrix B, and buffers the data in each PE of the operation circuit 303. The operation circuit 303 stores, into an accumulator (accumulator) 308, a part of matrix results or a final matrix result obtained by performing a matrix operation on data of the matrix A fetched from an input memory 301 and the matrix B.

A vector calculation unit 307 may perform further processing such as vector multiplication, vector addition, an exponent operation, a logarithm operation, or value comparison on output of the operation circuit 303. For example, the vector calculation unit 307 may be configured to perform network calculation, such as pooling (pooling), batch normalization (batch normalization), or local response normalization (local response normalization), at a non-convolution/non-FC layer of a neural network.

In some implementations, the vector calculation unit 307 can store a processed output vector in a unified memory 306. For example, the vector calculation unit 307 may apply a non-linear function to the output of the operation circuit 303. For example, the non-linear function is applied to a vector of an accumulated value to generate an activation value.

In some implementations, the vector calculation unit 307 generates a normalized value, a combined value, or both.

In some implementations, a processed output vector can be used as an activation input to the operation circuit 303, for example, the processed output vector can be used at a subsequent layer of the neural network.

The unified memory 306 is configured to store input data and output data. For weight data, a storage unit access controller (direct memory access controller, DMAC) 305 transfers input data in an external memory to the input memory 301 and/or the unified memory 306, stores weight data in the external memory into the weight memory 302, and stores data in the unified memory 306 into the external memory.

A bus interface unit (bus interface unit, BIU) 310 is configured to implement interaction between the host CPU, the DMAC, and an instruction fetch buffer 309 through a bus.

The instruction fetch buffer (instruction fetch buffer) 309 connected to the controller 304 is configured to store instructions to be used by the controller 304. The controller 304 is configured to invoke the instructions buffered in the instruction fetch buffer 309, to control a working process of an operation accelerator.

Generally, the unified memory 306, the input memory 301, the weight memory 302, and the instruction fetch buffer 309 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Currently, in a neural network search method in the conventional technology, a neural network model is generally searched for based on floating-point operations per second (floating-point operations per second, FLOPS), to compress a source neural network and obtain network structure information of a target neural network. The FLOPS is usually used to estimate running efficiency of a hardware platform. However, different hardware platforms have different implementations and optimizations for different operators. Therefore, the FLOPS cannot always reflect an actual time overhead (namely, time consumption).

For example, it is assumed that an operator A and an operator B can implement a same function. In other words, a neural network may perform an operation by using the operator A, or may perform an operation by using the operator B. It is assumed that the operator A is a $1 \times 1$ convolution algorithm and includes 10 million multiplications, and the operator B is a $3 \times 3$ convolution algorithm and includes 15 million multiplications. It can be learned that FLOPS of the operator A is less than FLOPS of the operator B, and it is generally estimated that time consumed by the operator A is less than time consumed by the operator B.

In actual application, the following case may exist: When the operator A or the operator B runs on a hardware platform 1, the operator A actually consumes 2 μs, and the operator B actually consumes 3 μs. In this case, when the neural network is deployed on the hardware platform 1, if time consumption is mainly considered, the operator A is preferably used. When the operator A or the operator B runs on a hardware platform 2, because the hardware platform 2 performs specific optimization on the operator B, actual time consumed by the operator B is 1.5 μs, but actual time consumed by the operator A is still 2 μs. In this case, when the neural network is deployed on the hardware platform 2, if time consumption is mainly considered, the operator B is preferably used.

Therefore, when the neural network model is searched for based on the FLOPS, an obtained evaluation result (for example, an evaluation result of time overheads) of the target neural network on a target hardware platform is not necessarily better than an evaluation result of the source neural network on the target hardware platform.

In view of this, an embodiment of this application provides an adaptive search method for a neural network.

Adaptive search for a neural network may be performed, based on an evaluation metric of a target hardware platform, on a super network extended from a source neural network, so that a target neural network adaptive to the target hardware platform can be found on a premise of high search flexibility, and an evaluation result of the found target neural network running on the target hardware platform is better than an evaluation result of the source neural network running on the target hardware platform.

The following describes in detail the adaptive search method for a neural network in this embodiment of this application with reference to accompanying drawings. The adaptive search method for a neural network in this embodiment of this application may be performed by a device such as the data processing device in FIG. 1 or the data processing device 210 in FIG. 2.

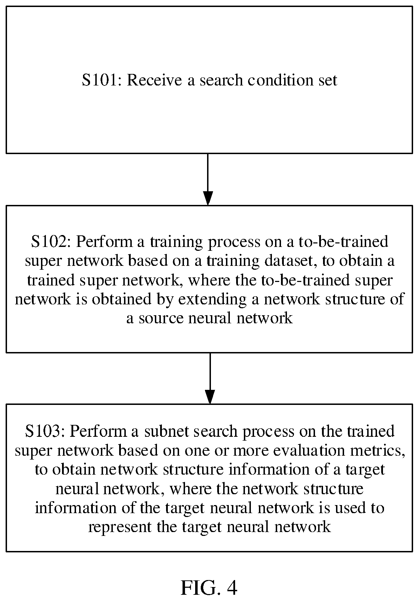

FIG. 4 is a schematic flowchart of an adaptive search method for a neural network according to an embodiment of this application. The method may include S101 to S103.

S101: Receive a search condition set.

As described above, when a neural network (namely, a source neural network) runs (or is carried) on a hardware platform of a terminal device needs to be optimized, or a hardware platform on which a neural network (namely, a source neural network) runs (or is carried) and that is of a terminal device is replaced with another hardware platform, a network structure of the source neural network needs to be optimized based on a target hardware platform. In general, horizontal extension and/or vertical extension is first performed based on network structure information of the source neural network, to extend the source neural network to a super network. Then, based on one or more evaluation metrics, a neural network suitable for the target hardware platform is searched from the super network as a target neural network. The target neural network may run or be carried on the target hardware platform. In addition, an evaluation result of the target neural network on the target hardware platform is better than that of the source neural network running on the target hardware platform.

First, a user needs to input the search condition set, where the search condition set includes target hardware platform information, the network structure information of the source neural network, and the one or more evaluation metrics.

For example, the target hardware platform information may include information such as an attribute of the target hardware platform, a model of the target hardware platform, a manufacturer of the target hardware platform, and a to-be-executed task of the target hardware platform. In this way, a target neural network more suitable for a current target hardware platform can be found based on the target hardware platform information. Hardware designs of hardware platforms with a same attribute but different manufacturers, hardware platforms with a same manufacturer but different attributes, or hardware platforms with a same attribute but different models may be different, and advantages and disadvantages of running a same operator or a same operator set may also be different. Therefore, different hardware platforms need to be considered in a search process. In addition, when tasks corresponding to the target neural network running on the target hardware platform are different, different evaluation metrics may be considered. Therefore, in a search process, the task corresponding to the target neural network running on the hardware platform also needs to be considered. For example, an image detection (detection) task is to detect an object in an image, and select a location of the object in a box. An image segmentation (segmentation) task is to refine a bounding box based on a detection task and segment a recognized object and an image with precise boundaries. It is clear that, a precision evaluation metric of the image segmentation task is higher than that of the image detection task.

It may be understood that, in a scenario in which a neural network on a hardware platform of the terminal device is optimized, the hardware platform is the target hardware platform. In a scenario in which a hardware platform of the terminal device is replaced, a hardware platform after replacement is the target hardware platform.

The network structure information of the source neural network is used to represent the source neural network. For example, the network structure information of the source neural network may include first operator sets included in the source neural network. Each first operator set may include one or more operators. The source neural network in this embodiment of this application may be a convolutional neural network (convolutional neural network, CNN), a recurrent neural network (recurrent neural network, RNN), a perceptron (perceptron), a feedforward neural network (feedforward neural network, FNN), a deep belief network (deep belief network, DBN), a generative adversarial network (generative adversarial network, GAN), or the like.

The network structure information of the source neural network is described by using an example in which the source neural network is a convolutional neural network.

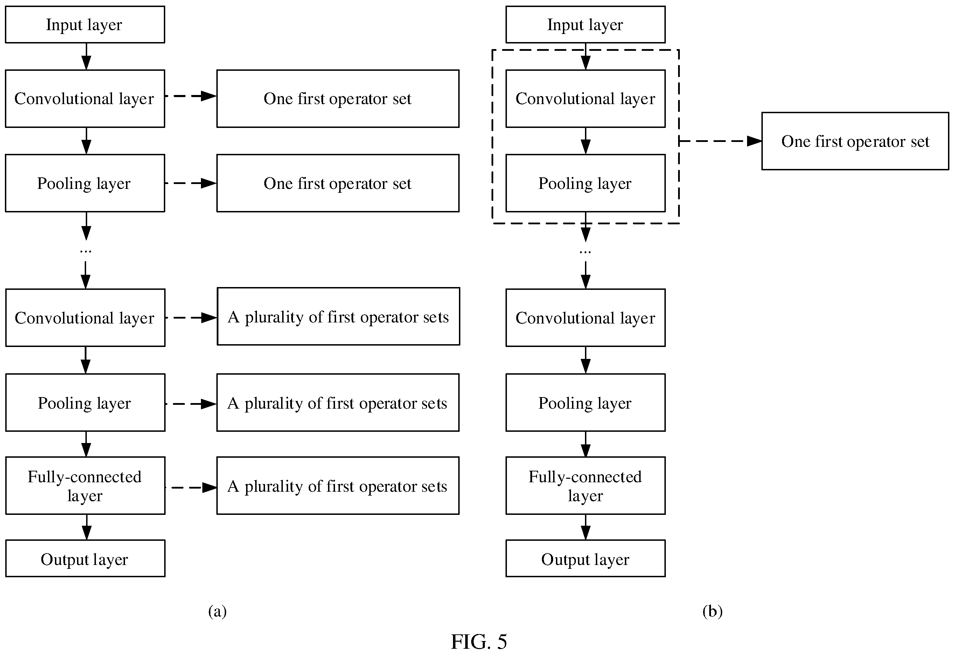

(a) in FIG. 5 is a schematic diagram of a network structure of a convolutional neural network. Generally, the convolutional neural network includes an input layer, a hidden layer, and an output layer. The hidden layer of the convolutional neural network includes one or more convolutional layers (convolutional layers), one or more pooling layers (pooling layers), and one or more fully-connected layers (fully-connected layers). Generally, the one or more convolutional layers are followed by one pooling layer. As shown in (a) in FIG. 5, for example, one convolutional layer may include one or more convolution operators. One convolution operator may correspond to one first operator set, or a plurality of convolution operators correspond to one first operator set. One pooling layer may include one or more pooling operators, and may correspond to one or more first operator sets. One fully-connected layer may include one or more fully-connected layer operators, and may correspond to one or more first operator sets. For another example, as shown in (b) in FIG. 5, a plurality of operators included in one convolutional layer and one pooling layer may constitute one first operator set.

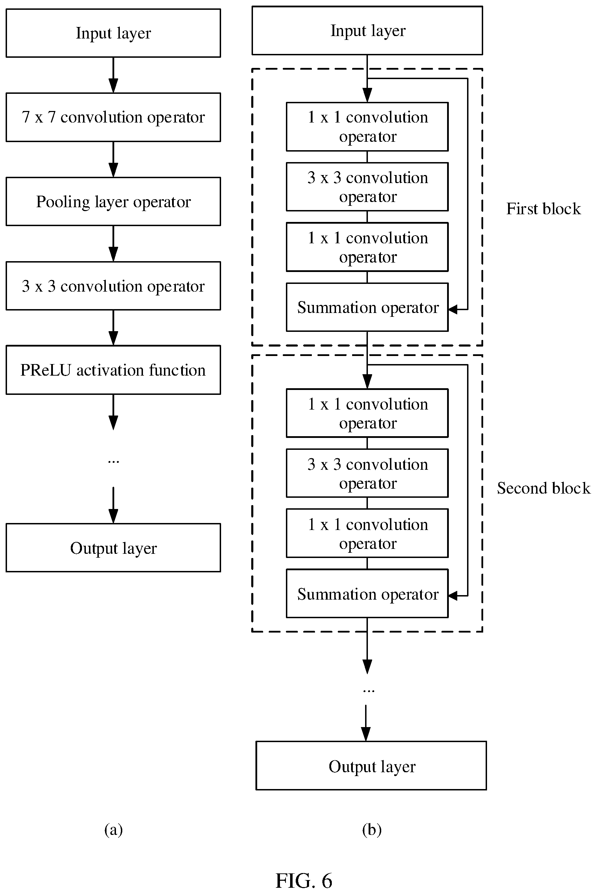

For example, if each layer in the source neural network corresponds to a first operator set, and one operator set includes one first operator, the network structure of the source neural network may be represented as a network structure shown in (a) in FIG. 6, including an input layer, a hidden layer, and an output layer. Each level of the hidden layer corresponds to one first operator set including a single first operator. For another example, if a plurality of levels in the source neural network correspond to one first operator set, the network structure of the source neural network may be represented as a network structure shown in (b) in FIG. 6, including an input layer, a hidden layer, and an output layer. The hidden layer includes two block structures (combinations of a plurality of operators). Each block structure includes three convolution operators of one convolutional layer and a summation operator of one pooling layer.

The evaluation metric may include a requirement for network performance that the target neural network needs to have in a process of searching for a neural network model. The one or more evaluation metrics include any one or more of: a precision evaluation metric of the neural network model, a time overhead evaluation metric of the neural network model, a storage space evaluation metric of the neural network model, a power consumption evaluation metric of the neural network model, a utilization evaluation metric of a tensor calculation unit of the neural network model, and a memory read/write speed evaluation metric of the neural network model.

The precision evaluation metric of the neural network model includes that precision of the target neural network is not less than a precision threshold. The time overhead evaluation metric of the neural network model includes that a time overhead of the target neural network is not greater than a time overhead threshold. The storage space evaluation metric of the neural network model includes that storage space occupied by the target neural network is not greater than a storage space threshold. The power consumption evaluation metric of the neural network model includes that power consumption of the target neural network is not greater than a power consumption threshold. The utilization evaluation metric of the tensor calculation unit of the neural network model includes that utilization of the tensor calculation unit of the target neural network is not less than a utilization threshold of the tensor calculation unit. The memory read/write speed evaluation metric of the neural network model includes that a memory read/write speed of the target neural network is not less than a memory read/write speed threshold.

It should be noted that the one or more evaluation metrics may be set based on factors such as different user requirements, different application scenarios, or different tasks.

For example, the precision threshold may be set, to ensure that precision of a found target neural network is not less than precision of the source neural network or is not less than an interval of precision of the source neural network (for example, not less than 99% of the precision of the source neural network).

For another example, the time overhead threshold may be set to be less than a time overhead threshold of the target neural network, to increase a processing speed of the found target neural network. Generally, a smaller time overhead of the target neural network indicates a faster processing speed of the target neural network. For example, the time overhead threshold may be set to be within an interval of a time overhead of the source neural network (for example, within 80% of the time overhead of the source neural network).

For example, a surveillance image collected per unit time by an image processing module in a monitor of a bustling road section includes a large amount of information, and a large quantity of operations need to be performed. In this case, a neural network carried on the image processing module needs to have lower time overheads, to process the image more quickly. In this way, a small time overhead threshold needs to be set, so that a found target neural network can process a large quantity of surveillance images more quickly. For another example, a surveillance image collected per unit time by an image processing module in a monitor in a sparsely populated suburb area includes a small amount of information, and a small quantity of operations are performed. In this case, a neural network carried on the image processing module is allowed to have higher time overheads, and a time overhead threshold may be set to be higher.

For another example, the storage space threshold may be set based on a storage space size of the target hardware platform, to avoid a case in which a found target neural network needs to occupy excessively large storage space and cannot be stored in the target hardware platform. Alternatively, the power consumption threshold may be set based on a power consumption requirement of the target hardware platform, to reduce power consumption generated when the target neural network runs on the target hardware platform, and meet an overall power consumption requirement of running the target hardware platform. Alternatively, the utilization threshold of the tensor calculation unit and the memory read/write speed threshold are used to measure a degree of matching between a found target neural network and the target hardware platform. Higher utilization of the tensor calculation unit of the found target neural network on the target hardware platform indicates a higher degree of matching between the found target neural network and the target hardware platform and a faster overall processing speed. For example, during image processing, higher utilization of the tensor calculation unit of the found target neural network on the target hardware platform indicates a faster image processing speed.

For another example, two or more evaluation metrics may alternatively be set at the same time. For example, the precision threshold and the time overhead threshold may be set at the same time. For example, in some scenarios, recognition results of a large quantity of images need to be obtained in a short time, but a requirement for image recognition precision is not high. In this case, a small precision threshold and a small time overhead threshold may be set, so that a recognition speed of a found target neural network is faster than that of the source neural network.

S102: Perform a training process on a to-be-trained super network based on a training dataset, to obtain a trained super network, where the to-be-trained super network is obtained by extending the network structure of the source neural network.

For example, the to-be-trained super network is constructed in a horizontal extension mode and/or a vertical extension mode based on the network structure of the source neural network, an extension rule in a knowledge base, and the target hardware platform information. The extension rule in the knowledge base includes that there are different correspondences between a first operator set and a derived second operator set in the source neural network based on different hardware platforms. It may be understood that the first operator set and the corresponding derived second operator set have a same or similar function.

Specifically, based on the extension rule in the knowledge base, a derived second operator set that corresponds to each first operator set included in the source neural network and that runs (or is carried) on the target hardware platform is found. For example, when the super network is extended based on the knowledge base, it may be determined to retain a part of first operator sets in the source neural network, or replace a part of first operator sets in the source neural network with second operator sets, or skip (skip) levels corresponding to a part of first operator sets.

For example, it is assumed that the source neural network includes three adjacent levels, and each level includes one first operator set including a $3 \times 3$ convolution operator. In other words, the three levels may be represented as $3 \times 3$ convolution operator + $3 \times 3$ convolution operator + $3 \times 3$ convolution operator. On the target hardware platform, if a $5 \times 5$ convolution operator can implement a function the same as or similar to that of the $3 \times 3$ convolution operator, a part of $3 \times 3$ convolution operators at the three adjacent levels may be replaced with the $5 \times 5$ convolution operator, and a part of $3 \times 3$ convolution operators may be replaced with skip. In this way, overall time overheads of the three levels are reduced, and it is also ensured that an operator set after replacement can complete a same task as the corresponding first operator set in the source neural network. For example, a derived second operator set may be skip + $3 \times 3$ convolution operator + $5 \times 5$ convolution operator. In other words, in the knowledge base, the $3 \times 3$ convolution operator may correspond to the $5 \times 5$ convolution operator based on the target hardware platform. In this case, when a super network of the source neural network is constructed, the $3 \times 3$ convolution operator in the source neural network may be replaced with the $5 \times 5$ convolution operator.

For another example, the source neural network includes a first operator set (A + B + C), where A, B, and C are different operators. It can be learned from the conventional technology that three operator sets (A1 + B1 + C1), (A2 + B2 + C2), and (A3 + B3 + C3) all have a function the same as or similar to that of (A + B + C). However, based on expert priori knowledge, it is learned that an implementation effect of (A3 + B3 + C3) on the target hardware platform is poorer. Therefore, when the knowledge base is established, a correspondence between the first operator set (A + B + C) and the second operator set (A3 + B3 + C3) is not established on the target hardware platform. Therefore, when the super network of the source neural network is constructed, the first operator set (A + B + C) may be replaced with the second operator set (A1 + B1 + C1) and the second operator set (A2 + B2 + C2) based on the knowledge base.

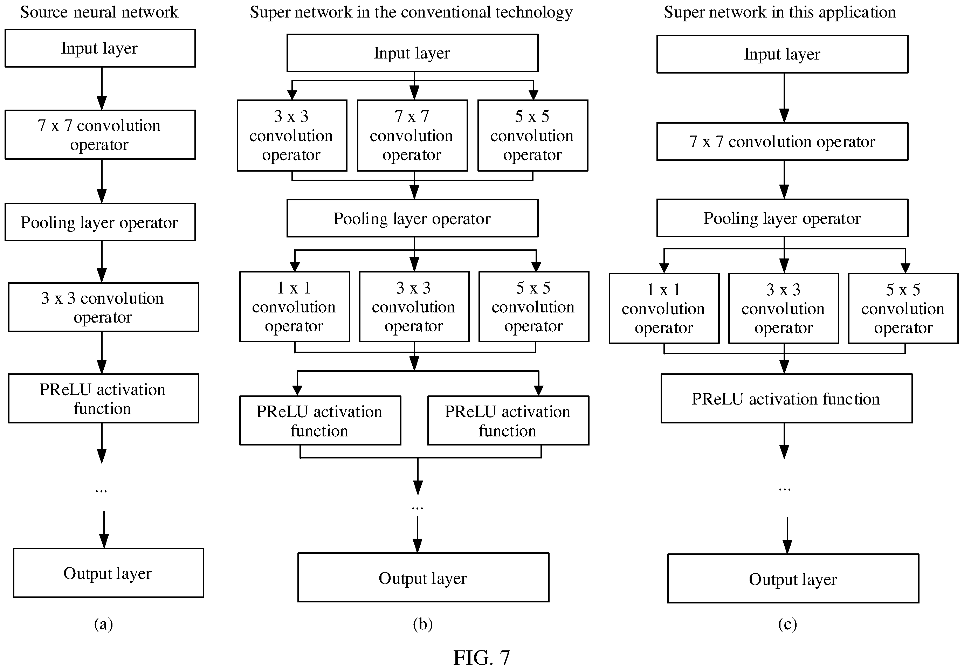

It should be noted that the extension rule in the knowledge base includes horizontal extension and/or vertical extension. The horizontal extension may be understood as that a level of a first operator set is the same as a level of corresponding derived second operator sets, but the first operator set corresponds to a plurality of derived second operator sets. For example, as shown in (a) in FIG. 7, a first operator set including a $7 \times 7$ convolution operator may correspond to two derived second operator sets at a current level, where the two derived second operator sets respectively include a $3 \times 3$ convolution operator and a $5 \times 5$ convolution operator. In this case, an arrangement manner of the corresponding level is shown in (b) in FIG. 7. The vertical extension may be understood as vertical extension performed on a part of levels in the source neural network when the super network is constructed. For example, first operator sets included in four adjacent levels in the source neural network are $3 \times 3$ convolution operator (64 channels) + $3 \times 3$ convolution operator (64 channels) + $3 \times 3$ convolution operator (128 channels) + $3 \times 3$ convolution operator (128 channels). Because operator sets that have a same convolution kernel size but different channel quantities cannot be directly replaced, the source neural network may be vertically extended to reduce overall time overheads, so as to construct the super network. For example, the operator sets in the foregoing four adjacent levels are vertically extended to operator sets in six adjacent levels, for example, vertically extended to $3 \times 3$ convolution operator (64 channels) + $3 \times 3$ convolution operator (64 channels) + $3 \times 3$ convolution operator (64 channels) + $3 \times 3$ convolution operator (128 channels) + $3 \times 3$ convolution operator (128 channels) + $3 \times 3$ convolution operator (128 channels). In this case, a corresponding derived second operator set may include $3 \times 3$ convolution operator (64 channels) + $3 \times 3$ convolution operator (64 channels) + $3 \times 3$ convolution operator (64 channels) + $3 \times 3$ convolution operator (128 channels) + skip + skip.

The following provides two examples of extending the source neural network to the super network, to describe a difference between an extension method in the conventional technology and a method provided in the embodiments of the present invention.

Example 1: The source neural network is a chain neural network including operators (for example, a convolution operator, a pooling operator, and an activation function) at a small granularity. In other words, a first operator set included in the source neural network includes only one first operator.

(a) in FIG. 7 shows an example of a structure of a source neural network. Structure information of the source neural network includes a plurality of first operator sets, and the first operator sets are respectively a $7 \times 7$ convolution operator, a pooling layer operator, a $3 \times 3$ convolution operator, a PReLU activation function, and the like.

(b) in FIG. 7 shows a super network constructed by using the conventional technology. It can be learned that all second operator sets that have a same or similar function as the first operator set are added to a third operator set corresponding to a location of the first operator set. For example, the $7 \times 7$ convolution operator in the source neural network is replaced with a $3 \times 3$ convolution operator, a $7 \times 7$ convolution operator, and a $5 \times 5$ convolution operator. The $3 \times 3$ convolution operator in the source neural network is replaced with a $1 \times 1$ convolution operator, a $3 \times 3$ convolution operator, and a $5 \times 5$ convolution operator. The PReLU activation function in the source neural network is replaced with a PReLU activation layer and a ReLU activation layer. In this way, when a neural network is searched for based on the super network, a search space size of the neural network is $3 \times 3 \times 2 = 18$.

(c) in FIG. 7 shows a super network constructed by using the method provided in embodiments of this application, to be specific, an operator set applicable to the target hardware platform is determined based on the knowledge base. For example, if it is determined that the $3 \times 3$ convolution operator and the $5 \times 5$ convolution operator that correspond to the $7 \times 7$ convolution operator in the source neural network have poor running effects on the target hardware platform, in the knowledge base, a third operator set corresponding to the $7 \times 7$ convolution operator includes only the $7 \times 7$ convolution operator. For another example, if it is determined that the PReLU activation function in the source neural network has a poor running effect on the target hardware platform, in the knowledge base, a third operator set corresponding to the PReLU activation function includes only the ReLU activation layer. In this case, when the super network is constructed based on the source neural network, the super network shown in (c) in FIG. 7 is constructed. When a neural network is searched for based on the super network, a search space size of the neural network is $1 \times 3 \times 1 = 3$.

It can be learned that, in this embodiment of this application, a derived operator set not suitable for the target hardware platform may be excluded by using the knowledge base. This helps reduce a scale of the super network and accelerate a training process of the super network. In addition, because the scale of the super network is reduced, and a search range of the target neural network is small, a search process can be further shortened, and it can be faster to find the target neural network.

Example 2: The source neural network is a chain neural network including a block structure at a large granularity. In other words, a first operator set includes one or more block structures, and each block structure includes a plurality of operators.

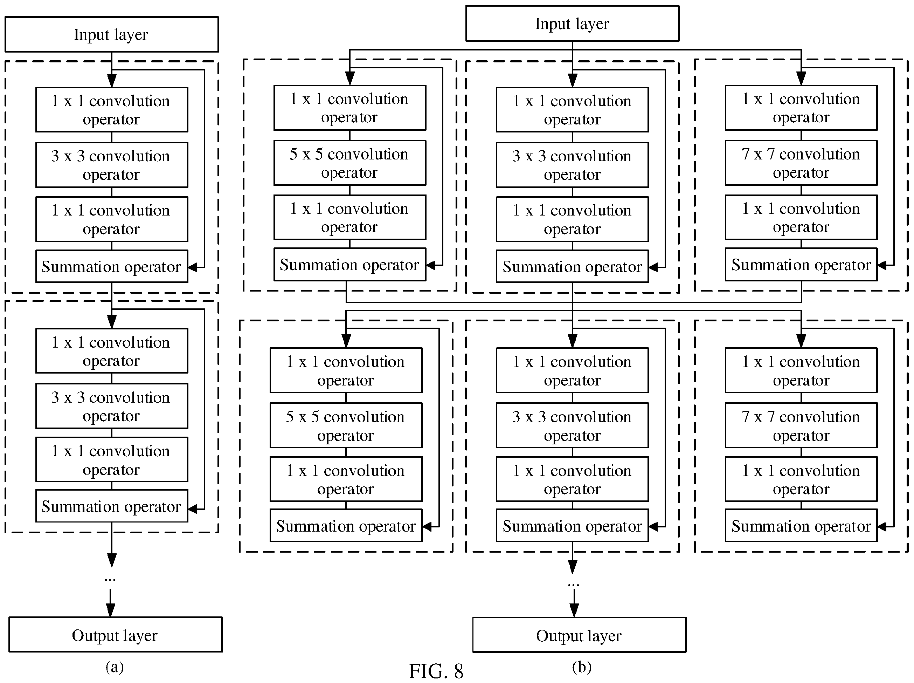

(a) in FIG. 8 shows an example of a structure of a source neural network. The source neural network includes a plurality of first operator sets. Each first operator set is a block structure that includes a $1 \times 1$ convolution operator, a $3 \times 3$ convolution operator, a $1 \times 1$ convolution operator, and a summation operator for a joint operation, and is denoted as a block structure 1.

(b) in FIG. 8 shows a super network constructed by using the method provided in embodiments of this application. For example, it is determined, based on the knowledge base, that the block structure 1 of the source neural network has a same or similar function as a block structure 2 (for example, a block structure including a $1 \times 1$ convolution operator, a $5 \times 5$ convolution operator, a $1 \times 1$ convolution operator, and a summation operator for a joint operation) and a block structure 3 (for example, a block structure including a $1 \times 1$ convolution operator, a $7 \times 7$ convolution operator, a $1 \times 1$ convolution operator, and a summation operator for a joint operation), and is applicable to the target hardware platform. In this case, when the super network is constructed based on the source neural network, the block structure 1 may be replaced with the block structure 2 and the block structure 3, or the block structure 1 may be retained, in other words, the super network shown in (b) in FIG. 8 is constructed.

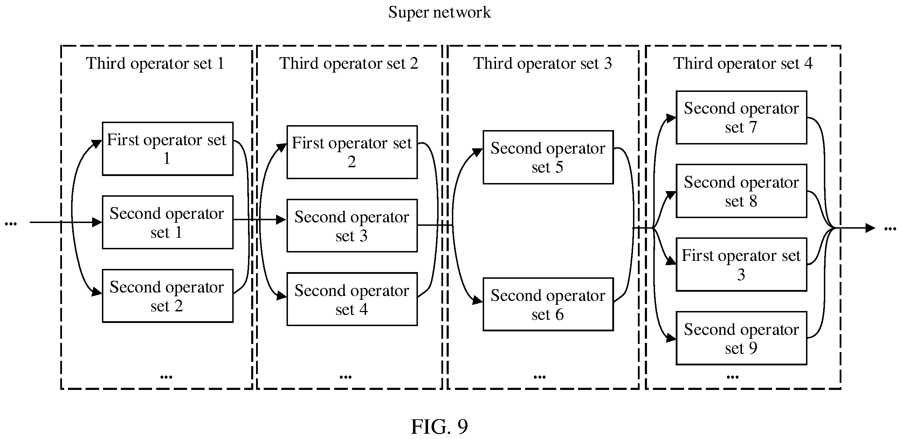

FIG. 9 shows an example of a super network extended based on the source neural network and the target hardware platform. The extended super network can implement a same function as the source neural network. However, in this case, because an internal parameter is not adjusted, precision may be low and a user requirement cannot be met. Therefore, the extended super network is a to-be-trained super network. Further, the to-be-trained super network may be trained by using the training dataset, to obtain a trained super network. In this way, precision of the trained super network is close to the precision threshold, and the trained super network is used as a basis for subsequently searching for the target neural network.

In some examples, when the training dataset is obtained, a data reading manner of the training dataset further needs to be obtained, for example, an arrangement manner and a reading method of images included in the training dataset. In some other examples, a specified hyperparameter value required in a process of training the super network further needs to be obtained, for example, a preset quantity of iterative training times, training duration, or a target precision threshold for training the super network in the training process. In still some other examples, a specified hyperparameter value required in a process of searching for the target neural network in the trained super network further needs to be obtained, for example, a quantity of iteration times required or a quantity of subnets that need to be obtained in the search process.

The following describes in detail two methods for training the super network provided in embodiments of this application.

Method 1: The super network is trained by using a weighted averaging method.

In some examples, the extended super network shown in FIG. 9 includes four third operator sets: a third operator set 1 to a third operator set 4. In other words, all operator sets included in one dashed-line box constitute one third operator set. The third operator set 1 includes one first operator set 1 and two second operator sets (a second operator set 1 and a second operator set 2). Weights are respectively set for the first operator set 1, the second operator set 1, and the second operator set 2, and a sum of the weights of the three operator sets is 1. In some examples, the weights of the first operator set 1, the second operator set 1, and the second operator set 2 may be set to be the same, for example, approximately 0.33. By analogy, weights of a first operator set and/or second operator sets in another third operator set are set.

Then, the training dataset is input into the extended super network to train the super network. For example, the training dataset is input into the third operator set 1, all the operator sets included in the third operator set 1 participate in calculation of the training dataset, and a feature map output by the third operator set 1 is obtained after weighted averaging is performed on calculation results of all the operator sets included in the third operator set 1. The feature map output by the third operator set 1 after calculation is input into the third operator set 2, and weighted averaging calculation continues to be performed on all operator sets included in the third operator set 2. By analogy, after a calculation result of the last third operator set is obtained, a final feature map is output.

Then, the final feature map is input into a loss function, and iterative training is performed on the extended super network again. In an iterative training process, an internal parameter of the extended super network is adjusted.

Finally, after a preset quantity of iterative training times, training duration, or a target precision threshold for training the super network meets a requirement, training is stopped. In this case, the super network is a trained super network, and a process of searching for the target neural network may be executed in the trained super network.

Method 2: The super network is trained by using a onehot sampling method.

In some examples, a first operator set or a derived second operator set is obtained from each third operator set in the extended super network by using the onehot sampling method, to constitute a to-be-trained subnet. The training dataset is input into the to-be-trained subnet to train the subnet.

For example, the extended super network shown in FIG. 9 includes four third operator sets: a third operator set 1 to a third operator set 4. In other words, all operator sets included in one dashed-line box constitute one third operator set. The third operator set 1 includes one first operator set 1 and two second operator sets (a second operator set 1 and a second operator set 2). The third operator set 2 includes one first operator set 2 and two second operator sets (a second operator set 3 and a second operator set 4). For example, the onehot sampling method is used to extract the first operator set 1 from the third operator set 1, and extract the second operator set 3 from the third operator set 2. The training dataset is input into the first operator set 1 in the third operator set 1 for calculation, and a feature map is output into the second operator set 3 in the third operator set 2 for calculation. By analogy, after a calculation result of the last third operator set is obtained, a final feature map is output and input into a loss function. In addition, iterative training is performed on the subnet, and in an iterative training process, an internal parameter of the to-be-trained subnet is adjusted.

According to the foregoing method, each time of sampling is performed by using the onehot sampling method, one to-be-trained subnet may be obtained for training, and an internal parameter of the to-be-trained subnet may be adjusted.

Finally, after a preset quantity of sampling times, a preset quantity of iterative training times, training duration, or a target precision threshold for training the super network meets a requirement, training is stopped. In this case, the super network is a trained super network, and a process of searching for the target neural network may be executed in the trained super network.

It should be noted that the extended super network may be trained by using any one of the foregoing methods, to obtain the trained super network. Alternatively, the extended super network may be first trained by using Method 1. Then, the extended super network is retained by using Method 2, to obtain the trained super network.

S 103: Perform a subnet search process on the trained super network based on the one or more evaluation metrics, to obtain network structure information of the target neural network. The network structure information of the target neural network is used to represent the target neural network.

In some embodiments, after the trained super network is obtained, evaluation results of first operator sets and/or derived second operator sets in third operator sets in the trained super network on the target hardware platform based on the one or more evaluation metrics further need to be obtained. One first operator set or one derived second operator set is extracted from each third operator set in the trained super network, to constitute a to-be-evaluated candidate subnet. A plurality of to-be-evaluated candidate subnets are obtained through a plurality of times of extraction. Then, one or more target neural networks are determined based on evaluation results that are of first operator sets and/or derived second operator sets included in the to-be-evaluated candidate subnets on the target hardware platform and that are based on the one or more evaluation metrics. When the one or more target neural networks run on the target hardware platform, an overall evaluation result based on the one or more evaluation metrics is better than an overall evaluation result obtained when the source neural network runs on the target hardware platform.

In other words, after the trained super network is obtained, information about a correspondence between the target hardware platform, network structures of M neural networks, N evaluation metrics, and P evaluation results is obtained. M, N, and P are all positive integers, and $P = M \times N$. The M neural networks are subnets extracted from the trained super network, namely, to-be-evaluated candidate subnets. It is clear that, the network structures of the M neural networks are included in a network structure of the trained super network. In this way, the evaluation results (evaluation results respectively corresponding to the N evaluation metrics) corresponding to the first operator sets and/or the derived second operator sets in the third operator sets in the trained super network may be determined by using the foregoing correspondence, and evaluation results of the to-be-evaluated candidate subnets may be obtained by adding the evaluation results of the first operator sets and/or the derived second operator sets included in the to-be-evaluated candidate subnets. It is clear that, one candidate subnet corresponds to N evaluation results based on the N evaluation metrics, and M candidate subnets correspond to $M \times N$ evaluation results based on the N evaluation metrics, namely, the P evaluation results. Then, one or more candidate subnets are determined as the target neural network based on the P evaluation results.

For example, when the N evaluation metrics include the time overhead evaluation metric of the neural network model (that is, N = 1), the time overhead evaluation metric of the neural network model includes that the time overhead of the target neural network is not greater than the time overhead threshold.

Correspondingly, subnet evaluation is performed, based on the time overhead evaluation metric of the neural network model, on the M candidate subnets included in the trained super network. First, time overheads of running first operator sets and/or derived second operator sets included in the M candidate subnets on the target hardware platform, namely, evaluation results based on the time overhead metric, are obtained. Then, a time overhead of running each candidate subnet in the M candidate subnets on the target hardware platform, namely, an evaluation result of each candidate subnet based on the time overhead metric, is determined based on a network structure of the candidate subnet. One or more candidate subnets are determined from the M candidate subnets as the target neural network based on the time overhead evaluation metric and the time overheads for running the M candidate subnets on the target hardware platform. The time overhead of the target neural network is not greater than the time overhead threshold.

The time overhead for running each candidate subnet on the target hardware platform is a sum of time overheads for running, on the target hardware platform, a combination of first operator sets and/or derived second operators included in the candidate subnet.

For another example, when the N evaluation metrics include the precision evaluation metric and the time overhead evaluation metric of the neural network model (that is, N = 2), the precision evaluation metric of the neural network model includes that the precision of the target neural network is not less than the precision threshold. The time overhead evaluation metric of the neural network model includes that the time overhead of the target neural network is not greater than the time overhead threshold.

Correspondingly, subnet evaluation is performed, based on the precision evaluation metric and the time overhead evaluation metric of the neural network model, on the M candidate subnets included in the trained super network. First, precision and time overheads of running, on the target hardware platform, first operator sets and/or derived second operator sets included in the M candidate subnets, namely, precision evaluation results based on the precision evaluation metric and time overhead evaluation results based on the time overhead metric, are obtained. Then, precision and time overheads of running each candidate subnet in the M candidate subnets on the target hardware platform, namely, the precision evaluation result of each candidate subnet based on the precision evaluation metric and the time overhead evaluation result of each candidate subnet based on the time overhead metric, are determined based on a network structure of the candidate subnet. One or more candidate subnets are determined from the M candidate subnets as the target neural network based on the precision evaluation metric, the time overhead evaluation metric, the precision of running the M candidate subnets on the target hardware platform, and the time overheads of running the M candidate subnets on the target hardware platform. The precision of the target neural network is not less than the precision threshold, and the time overheads are not greater than the time overhead threshold.

In the foregoing descriptions, an actual measurement method or a prediction method may be used to obtain an evaluation result of each first operator set or each derived second operator set on the target hardware platform based on the one or more evaluation metrics.

In some examples of this embodiment, the trained super network may be sent to a terminal device on which the target neural network needs to be deployed, and the trained super network runs on a target hardware platform of the terminal device, to obtain an evaluation result of each first operator set and/or each derived second operator set on the target hardware platform, that is, obtain an actually measured evaluation result.

For example, during actual measurement, any one first operator set or any one second operator set may be selected from each third operator set in the trained super network to constitute a subnet. A plurality of subnets are extracted from the trained super network through a plurality of times of extraction. The plurality of subnets separately run on the target hardware platform, to obtain evaluation results of the plurality of subnets on the target hardware platform. Evaluation results of the first operator sets and the second operator sets on the target hardware platform are obtained through calculation based on the evaluation results of the plurality of subnets on the target hardware platform and the first operator sets and/or the second operator sets included in the plurality of subnets.

In some other examples of this embodiment, first operator sets and/or derived second operator sets in third operator sets in the trained super network may be input into an evaluation result prediction model (the prediction model may be deployed on a data processing device, or may be deployed on another device), to directly obtain evaluation results of the first operator sets and/or the derived second operator sets, that is, obtain predicted evaluation results. The prediction model may be established through training based on evaluation results of a large quantity of operators and/or operator sets on the target hardware platform. For a training process of the prediction model, refer to the conventional technology. Details are not described in this embodiment of this application.

It should be noted that, alternatively, after the to-be-trained super network is obtained in the foregoing step S102, the foregoing step of obtaining the evaluation results of the first operator sets and/or the derived second operator sets on the target hardware platform based on the one or more evaluation metrics may be performed. In this way, after the super network is trained, the network structure information of the target neural network may be determined by directly using the evaluation results that are of the first operator sets and/or the derived second operator sets on the target hardware platform and that are based on the one or more evaluation metrics. This helps accelerate a process of searching for the target neural network. In other words, an occasion for obtaining the evaluation results of the first operator sets and/or the derived second operator sets on the target hardware platform based on the one or more evaluation metrics is not limited in this embodiment of this application.

The following describes in detail a process of performing subnet search on the trained super network based on the one or more evaluation metrics.

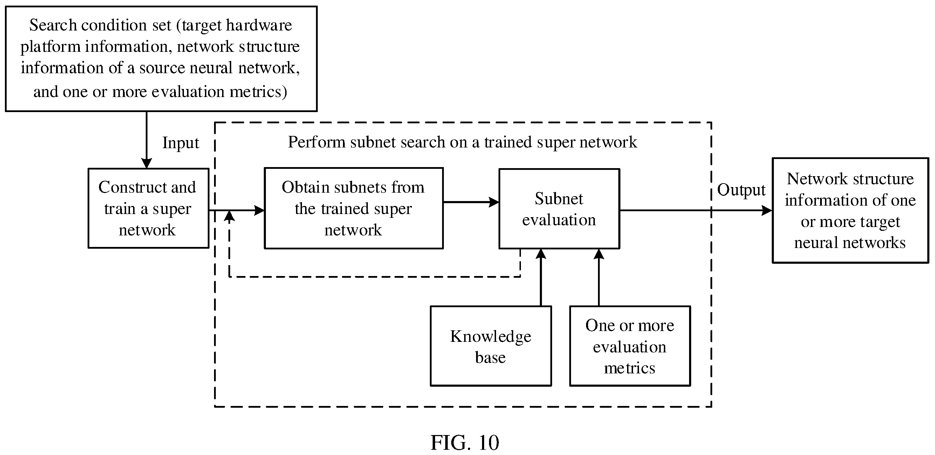

FIG. 10 is a schematic flowchart of still another adaptive search method for a neural network according to an embodiment of this application. The method includes: receiving a search condition set, including network structure information of a source neural network, target hardware platform information, one or more evaluation metrics, and the like. A super network is constructed and trained based on the network structure information of the source neural network and a knowledge base. For related content, refer to descriptions of the foregoing related steps. Details are not described herein again.

In some embodiments, in a process of performing subnet search on a trained super network, the knowledge base may be used to narrow a search range of a target neural network. For example, it is first determined, based on the knowledge base, that network structures of a part of candidate subnets have relatively good implementation effects on a target hardware platform, and then the candidate subnets are selected for evaluation based on the one or more evaluation metrics, thereby saving an unnecessary time for obtaining evaluation results of the candidate subnets.

In some other embodiments, in a process of performing subnet search on the trained super network based on the one or more evaluation metrics, an overall structure or a partial structure of the super network may be evaluated based on the one or more evaluation metrics to obtain an evaluation result, and one or more subnets are searched from the trained super network based on the evaluation result to determine the one or more subnets as the target neural network. Alternatively, several subnets may be first extracted from the super network, and the extracted several subnets are evaluated based on the one or more evaluation metrics, to obtain an evaluation result. One or more of the several subnets are determined as the target neural network based on the obtained evaluation result. Alternatively, several subnets may be first extracted from the super network, the extracted several subnets are evaluated based on the one or more evaluation metrics, to obtain an evaluation result, and then new subnets are extracted from the trained super network based on the evaluation result. The newly extracted subnets are evaluated based on the one or more evaluation metrics, to obtain evaluation results. Then, one or more of the re-obtained subnets are determined as a network structure of the target neural network based on the evaluation results in this case. In other words, a method for extracting a subnet from the trained super network based on the one or more evaluation metrics is not limited in this embodiment of this application.

The following describes in detail two methods for performing the subnet search process in the trained super network according to an embodiment of this application.

Method 1: The subnet search process is performed by using a differentiable method.

In some examples, a super network trained by using a weighted averaging method is obtained, and the subnet search process is performed in the trained super network by using the differentiable method.

For example, when inputting N evaluation metrics, a user also inputs one or more proportional relationships between the N evaluation metrics. It may be understood that the proportional relationship between the N evaluation metrics reflects relative importance between the N evaluation metrics. It is clear that, an evaluation effect of a found target neural network on the target hardware platform is better based on an evaluation metric with a higher proportion. For example, when a target neural network applicable to the target hardware platform that requires high precision is searched for, a precision metric proportion may be increased. For example, if the evaluation metrics include a precision metric and a time overhead metric, a proportion corresponding to the precision metric is greater than a proportion corresponding to the time overhead metric. For example, the proportion of the precision metric to the time overhead metric is 6:4.

If a data processing device receives r proportional relationships that are between the N evaluation metrics and that are input by the user, the data processing device performs one pre-search for each proportional relationship, where r is a positive integer.

In one pre-search process, weights are respectively set for evaluation results of first operator sets and/or derived second operator sets in third operator sets in the trained super network. In addition, the trained super network is retrained based on the N evaluation metrics and the proportional relationship between the N evaluation metrics. In a training process, the weights corresponding to the evaluation results of the first operator sets and the derived second operator sets are adjusted. A to-be-evaluated candidate subnet and an evaluation result of the to-be-evaluated candidate subnet are determined based on adjusted weights corresponding to the evaluation results of the first operator sets and the derived second operator sets.

An evaluation result or evaluation results of one or more to-be-evaluated candidate subnets is/are determined based on r pre-search processes, and one or more target neural networks are determined based on the evaluation result or the evaluation results of the one or more to-be-evaluated candidate subnets. In an example, evaluation results of a plurality of to-be-evaluated candidate subnets may be sorted in descending order, and one or more candidate subnets sorted first are obtained as the target neural network.

For example, it is assumed that the N evaluation metrics include a precision evaluation metric and a time overhead evaluation metric (that is, N = 2). Correspondingly, the proportional relationship between the N evaluation metrics includes a proportional relationship between the precision evaluation metric and the time overhead evaluation metric. For example, the user inputs a first proportion and a second proportion between the precision evaluation metric and the time overhead evaluation metric.

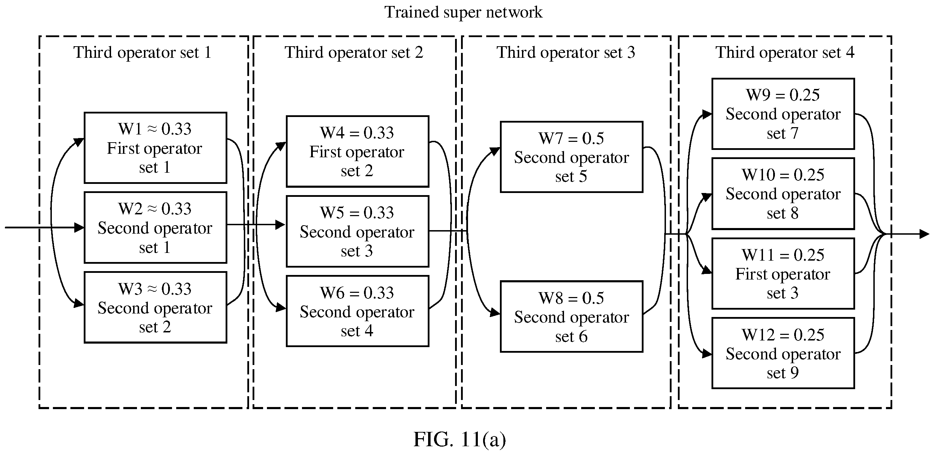

FIG. 11(a) shows a trained super network. Corresponding weights are set for a first operator set and/or one or more derived second operator sets in each third operator set in the super network. A sum of weights of a first operator set and/or one or more derived second operator sets in one third operator set is 1. For example, the super network shown in FIG. 11(a) includes four third operator sets, in other words, all operator sets included in one dashed-line box constitute one third operator set, which are respectively a third operator set 1 to a third operator set 4. The third operator set 1 includes one first operator set 1 and two second operator sets (a second operator set 1 and a second operator set 2). Weights are respectively set for the first operator set 1, the second operator set 1, and the second operator set 2, and a sum of the weights of the three operator sets is 1. In some examples, the weights of the first operator set 1, the second operator set 1, and the second operator set 2 may be set to be the same, for example, approximately 0.33. By analogy, weights of first operator sets and/or second operator sets in the other third operator sets are set.

In the training process, a training dataset is input into the trained super network for training. For example, the training dataset is input into the third operator set 1, and the first operator set and/or the derived second operator set in the third operator set 1 perform/performs calculation on the training dataset, to obtain a feature map output by the third operator set 1. In addition, evaluation results that are of the third operator set 1 and that are based on the N evaluation metrics further need to be calculated. An evaluation result that is of the third operator set 1 and that is based on an evaluation metric (for example, a time overhead) = evaluation result that is of the first operator set 1 and that is based on the evaluation metric $\times$ W1 + evaluation result that is of the second operator set 1 and that is based on the evaluation metric $\times$ W2 + evaluation result that is of the second operator set 2 and that is based on the evaluation metric $\times$ W3. The feature map output by the third operator set 1 after calculation and the evaluation results that are of the third operator set 1 and that are based on the N evaluation metrics are input into the third operator set 2, to continue calculation. Similarly, an evaluation result that is of the third operator set 2 and that is based on the N evaluation metrics = evaluation result that is of a first operator set 2 and that is based on the N evaluation metrics $\times$ W4 + evaluation result that is of a second operator set 3 and that is based on the N evaluation metrics $\times$ W5 + evaluation result that is of a second operator set 4 and that is based on the N evaluation metrics $\times$ W6. By analogy, after a calculation result of the last third operator set is obtained, a final feature map and accumulated evaluation results based on the N evaluation metrics (namely, an overall evaluation result of the super network) are output.

Then, the final feature map and the accumulated evaluation results based on the N evaluation metrics are input into a loss function, and iterative training is performed on the trained super network again. In an iterative training process, a weight or weights corresponding to an evaluation result or evaluation results of one or more first operator sets and/or a derived second operator set of each third set is/are adjusted in a back propagation process based on the accumulated evaluation results based on the N evaluation metrics. Training is stopped until a result of the loss function no longer changes or a preset quantity of iterative training times is reached, to obtain a retrained super network. A first operator set or derived second operator set with a maximum weight is selected from each third operator in the neural network to constitute a candidate subnet.

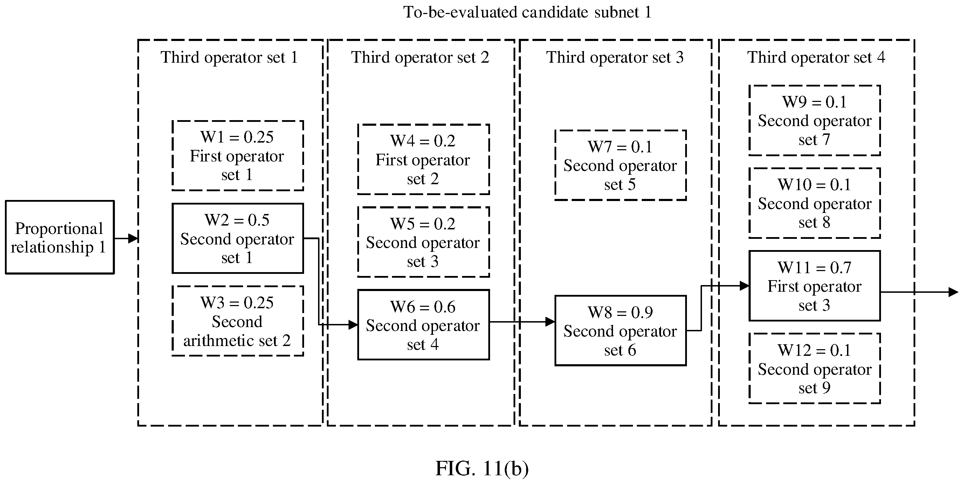

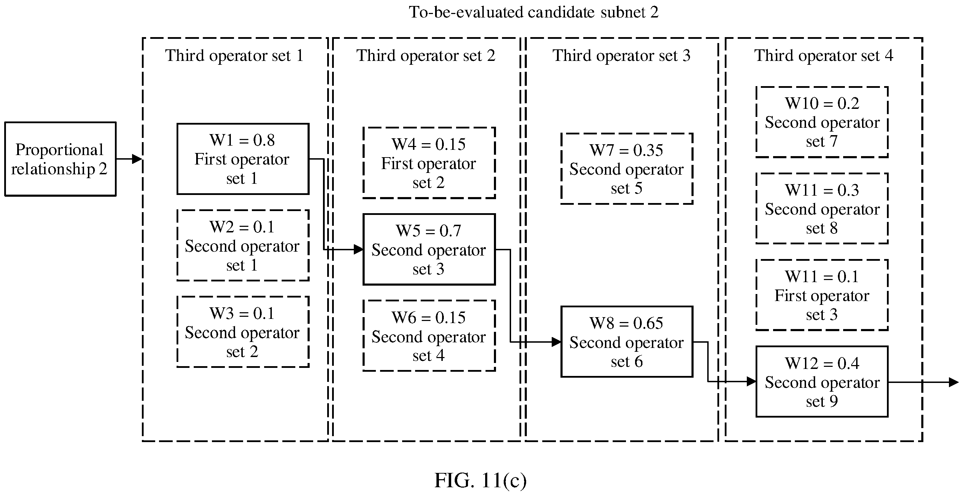

For example, FIG. 11(b) shows a trained super network on which iterative training is performed by using the foregoing method and that meets a condition for stopping training based on a proportional relationship 1. For the super network in this case, a first operator set or derived second operator set with a maximum weight is extracted from each third operator set to constitute a candidate subnet. For example, in FIG. 11(b), a plurality of second operator sets and a first operator set that are selected in solid-line boxes connected by arrows constitute one candidate subnet, and the candidate subnet is denoted as a to-be-evaluated candidate subnet 1. Similarly, FIG. 11(c) shows a trained super network on which iterative training is performed by using the foregoing method and that meets a condition for stopping training based on a proportional relationship 2. In FIG. 11(c), a plurality of second operator sets and a first operator set that are selected in solid-line boxes connected by arrows constitute one candidate subnet, and the candidate subnet is denoted as a to-be-evaluated candidate subnet 2.

A neural network with a better evaluation result is selected from the to-be-evaluated candidate subnet 1 and the to-be-evaluated candidate subnet 2 as the found target neural network.

Method 2: A target neural network search process is performed by using an evolution method.

In some examples, a super network trained by using a onehot sampling method is obtained, and the subnet search process is performed in the trained super network by using the evolution method. Alternatively, a super network that is first trained by using the weighted averaging method and then trained by using the onehot sampling method is obtained, and the subnet search process is performed in the trained super network by using the evolution method.

For example, one or more to-be-evaluated candidate subnets are extracted from the trained super network based on a preset rule, and evaluation results of each to-be-evaluated candidate subnet based on the N evaluation metrics are determined based on a network structure of each to-be-evaluated candidate subnet and evaluation results of first operator sets and/or second operator sets in third operator sets. The to-be-evaluated candidate subnets are sorted in descending order of the evaluation results obtained based on the N evaluation metrics, to obtain K first target candidate subnets corresponding to first K evaluation results. The preset rule may be randomly extracted, or may be preferably selecting a first operator set or second operator set with smaller FLOPS. This is not limited in this embodiment of this application.

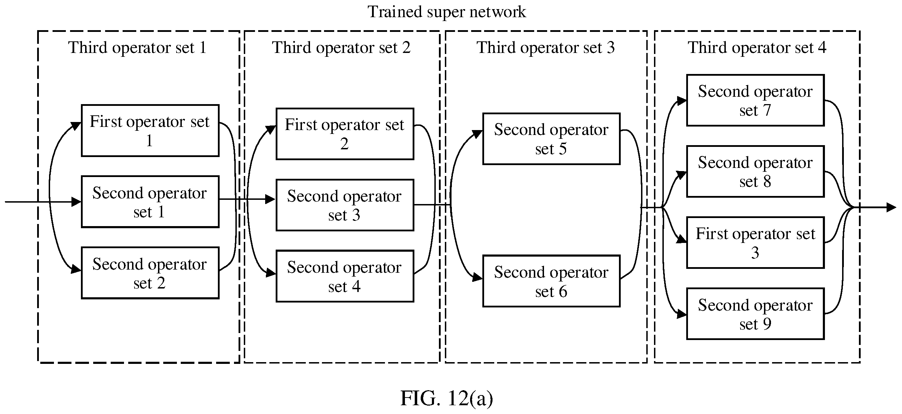

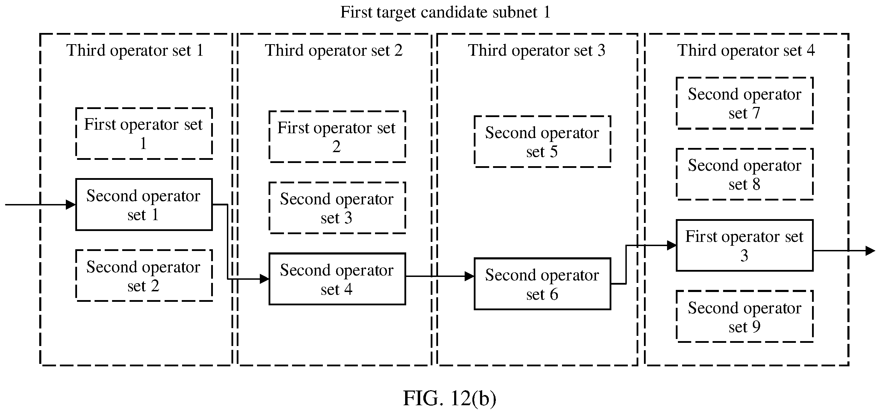

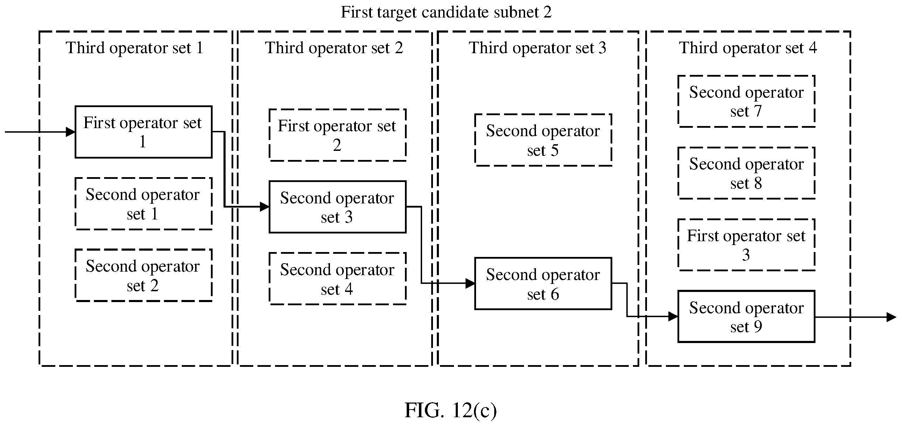

For example, FIG. 12(a) shows a trained super network, including, for example, four third operator sets, in other words, all operator sets included in one dashed-line box constitute one third operator set, which are respectively a third operator set 1 to a third operator set 4. The third operator set 1 includes a first operator set 1, a second operator set 1, and a second operator set 2. First, one first operator set or one derived second operator set is randomly extracted from each third operator set, to constitute a target candidate subnet. A plurality of target candidate subnets are obtained through a plurality of times of extraction. For example, as shown in FIG. 12(b), a neural network including a plurality of second operator sets and one first operator set that are selected by using solid-line boxes and that are connected by arrows is an extracted to-be-evaluated candidate subnet. For another example, as shown in FIG. 12(c), a network including a plurality of second operator sets and one first operator set that are selected by using solid-line boxes and that are connected by arrows is another extracted to-be-evaluated candidate subnet.

Then, S second target candidate subnets obtained after an $n^{th}$ round of hybridization and/or mutation are obtained based on the trained super network and the K first target candidate subnets, where n is a preset quantity of screening times, $n \geq 1$, K and S are positive integers, and $S > K$.

For example, in FIG. 12(b), the neural network including the second operator sets and the first operator set that are connected by arrows is a first target candidate subnet, and is denoted as a first target candidate subnet 1. In FIG. 12(c), the neural network including the second operator sets and the first operator set that are connected by arrows is another first target candidate subnet, and is denoted as a first target candidate subnet 2. In addition, the first target candidate subnet 1 and the first target candidate subnet 2 are two first target candidate subnets sorted first in the K first target candidate subnets. In this way, hybridization is performed on the first target candidate subnet 1 and the first target candidate subnet 2. For example, a second operator set 1 in a third operator set 1 in the first target candidate subnet 1 may be replaced with a first operator set 1 in a third operator set 1 in the first target candidate subnet 2, to obtain a second target candidate subnet (including the first operator set 1, a second operator set 4, a second operator set 6, and a first operator set 3).

The foregoing mutation means replacing a first operator set or second operator set included in a third operator set in the K first target candidate subnets with any first operator set or second operator set in a corresponding third operator set in the trained super network, to obtain a second target candidate subnet.

For example, in FIG. 12(b), the neural network including the second operator sets and the first operator set that are connected by arrows is a first target candidate subnet, and is denoted as the first target candidate subnet 1. In addition, the first target candidate subnet 1 is a first target candidate subnet that sorts first in the K first target candidate subnets. In this way, the first target candidate subnet 1 is mutated based on the trained super network shown in FIG. 12(a). For example, the second operator set 1 in the third operator set 1 in the first target candidate subnet 1 is replaced with the second operator set 2 included in the third operator set 1 in the trained super network, to obtain a second target candidate subnet (including the second operator set 2, the second operator set 4, the second operator set 6, and the first operator set 3).

It may be understood that the K first target candidate subnets may be hybridized to obtain the S second target candidate subnets. Alternatively, the K first target candidate subnets may be mutated to obtain the S second target candidate subnets. Alternatively, the K first target candidate subnets are hybridized and mutated to obtain the S second target candidate subnets. A quantity proportion of hybridization or mutation is not specifically limited in this embodiment of this application.

Then, evaluation results of the S second target candidate subnets are obtained and sorted in descending order based on network structures of the second target candidate subnets and evaluation results that are of first operator sets and/or second operator sets in third operator sets and that are based on the N evaluation metrics, to obtain K second target candidate subnets corresponding to the first K evaluation results.

Finally, after (n + 1) rounds of iterative training, to be specific, after n rounds of hybridization and/or mutation, the K $\times$ (n + 1) target candidate subnets are obtained. The K $\times$ (n + 1) target candidate subnets may be sorted again based on the one or more evaluation metrics, to obtain network structure information of one or more target neural networks.

For example, if S = 10 and K = 5, 10 first target candidate subnets are selected from the trained super network for the first time, 10 target candidate subnets are obtained after each round of hybridization and/or mutation, and five optimal target candidate subnets are retained in each screening training. After hybridization and/or mutation, a target candidate subnet selected in a previous round of screening may disappear. Therefore, in a training process, a target candidate subnet that disappears may be a neural network with optimal network performance. Therefore, finally, all target candidate subnets whose evaluation results obtained each time are sorted first are sorted again, and one or more better target candidate subnets are selected as the target neural network. It is assumed that n = 2, to be specific, iterative training is performed three times, and two rounds of hybridization and/or mutation are/is performed, the network structure information of the target neural network is finally determined in 5 $\times$ (2 + 1) = 15 target candidate subnets.

In view of this, according to the adaptive search method for a neural network provided in this embodiment of this application. Adaptive search for a neural network may be performed, based on an evaluation metric of the target hardware platform, on the super network extended from the source neural network, so that a target neural network adaptive to the target hardware platform can be found on a premise of high search flexibility, and an evaluation result of the found target neural network running on the target hardware platform is better than an evaluation result of the source neural network running on the target hardware platform.

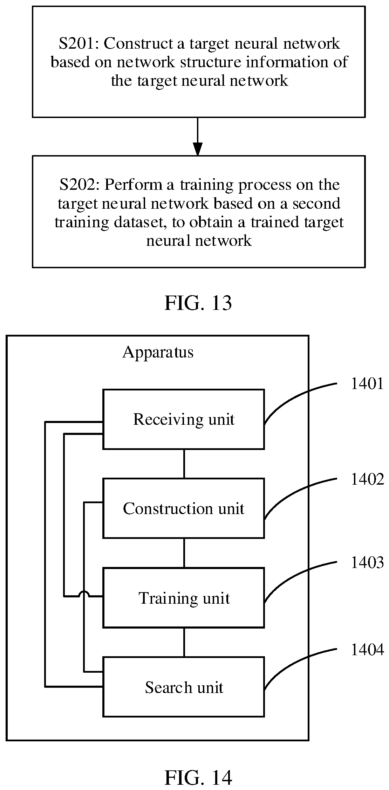

In some embodiments, after step S103, as shown in FIG. 13, the adaptive search method for a neural network may further include S201 and S202.

S201: Construct the target neural network based on the network structure information of the target neural network.

For example, as described above, the network structure information of the target neural network used to represent the target neural network is obtained, for example, information about included first operator sets and/or derived second operator sets, an arrangement manner of the first operator sets and/or the derived second operator sets, and a quantity of layers of the target neural network. The target neural network is constructed based on the network structure information of the target neural network.

S202: Perform a training process on the target neural network based on a second training dataset, to obtain a trained target neural network.

The second training dataset may be the same as or different from the training dataset used for training the super network in step S102.

In some embodiments, the constructed target neural network is a neural network found based on the trained super network, and can implement a same function as the source neural network. In addition, the evaluation result on the target hardware platform is better than the evaluation result of the source neural network on the target hardware platform. However, in this case, because an internal parameter of the target neural network has not been adjusted to an optimal state, a problem may occur in an actual application process of the target neural network. Therefore, the target neural network needs to be trained by using the second training dataset, and parameter information in the target neural network needs to be adjusted, to obtain a trained target neural network that can be actually applied to execute a target task.

For example, a preset condition may be set based on the evaluation metric, the target neural network is iteratively trained by using the second training dataset, and the internal parameter of the target neural network is adjusted in an iterative training process. A neural network obtained when a preset quantity of training times is reached or a loss function does not decrease is used as a trained target neural network that can be actually applied to the target hardware platform.

For example, the trained target neural network may execute, on the target hardware platform, a target task in a computer vision (computer vision, CV) field, for example, a target detection task and an image classification task. Specifically, the target detection task may include, for example, face detection, vehicle window face detection, human body/face detection, image mode detection, object classification, and license plate detection. The image classification task may include, for example, traffic light recognition, vehicle model recognition, and special vehicle model recognition.

In this way, the target neural network that can actually execute the target task on the target hardware platform can be obtained.

An embodiment of this application provides a communication system, including at least one server and at least one terminal device.

The at least one server performs step S101 to step S103 in FIG. 4, performs step S201 and step S202 in FIG. 13, and/or is used for another process of the technology described in this specification. The at least one terminal device sends a search condition set to the at least one server, where the search condition set includes target hardware platform information, network structure information of a source neural network, and one or more evaluation metrics, and the network structure information of the source neural network is used to represent the source neural network. The at least one terminal device receives a trained target neural network sent by the at least one server.

Optionally, the at least one terminal device is further configured to determine whether to send the trained target neural network to user equipment including a target hardware platform. The user equipment is used for a target neural network, and the user equipment may be a terminal device such as a mobile phone (mobile phone), a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR)/virtual reality (virtual reality, VR) device, or an artificial intelligence (artificial intelligence, AI) terminal. A specific form of the user equipment is not specially limited in this embodiment of this disclosure.

FIG. 14 is a schematic diagram of a possible structure of an adaptive search apparatus for a neural network in the foregoing embodiments. The apparatus includes: a receiving unit 1401, a construction unit 1402, a training unit 1403, and a search unit 1404.

The receiving unit 1401 is configured to support the apparatus to perform step S101 in FIG. 4, and/or is used for another process of the technology described in this specification.

The construction unit 1402 is configured to support the apparatus to perform step S102 in FIG. 4, step S201 in FIG. 13, and the steps performed by the construction module 212 in FIG. 2; and/or is used for another process of the technology described in this specification.

The training unit 1403 is configured to support the apparatus to perform step S102 in FIG. 4, step S202 in FIG. 13, and the steps performed by the training module 213 in FIG. 2; and/or is used for another process of the technology described in this specification.

The search unit 1404 is configured to support the apparatus to perform step S103 in FIG. 4, and the steps performed by the search module 215 in FIG. 2; and/or is used for another process of the technology described in this specification.

All related content of the steps in the foregoing method embodiments may be cited in function descriptions of corresponding functional units. Details are not described herein again.

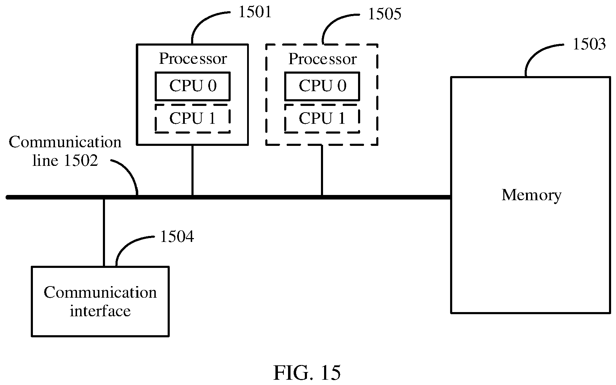

FIG. 15 is a schematic diagram of a hardware structure of an apparatus according to an embodiment of this application. The apparatus includes at least one processor 1501, a communication line 1502, a memory 1503, and at least one communication interface 1504. The memory 1503 may alternatively be included in the processor 1501.

The processor 1501 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1502 may include a path for transferring information between the foregoing components.

The communication interface 1504 is configured to communicate with another device. In the embodiments of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component integrating functions of sending and receiving information. A specific implementation of the transceiver is not limited in the embodiments of this application.

The memory 1503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through the communication line 202. Alternatively, the memory may be integrated with the processor.

The memory 1503 is configured to store computer-executable instructions for implementing the solutions of this application, and the processor 1501 controls execution. The processor 1501 is configured to execute the computer-executable instructions stored in the memory 1503, to implement the adaptive search method for a neural network provided in the following embodiments of this application.

Optionally, the computer-executable instruction in the embodiments of this application may also be referred to as application program code, an instruction, a computer program, or another name. This is not specifically limited in the embodiments of this application.

During specific implementation, in an embodiment, the processor 1501 may include one or more CPUs, for example, a CPU 0 and a CPU 1 in FIG. 15.

During specific implementation, in an embodiment, the apparatus may include a plurality of processors, for example, the processor 1501 and a processor 1505 in FIG. 15. Each of the processors may be a single-core (single-core) processor or a multi-core (multi-CPU) processor. Herein, the processor may be one or more devices, circuits, and/or processing cores configured to process data (for example, computer program instructions).

It should be noted that the foregoing apparatus may be a general-purpose device or a special-purpose device. A type of the apparatus is not limited in this embodiment of this application. A structure shown in this embodiment of this application does not constitute any specific limitation on the apparatus. In some other embodiments of this application, the apparatus may include more or fewer components than those shown in the figure, or some components may be combined, or some components may be split, or different component arrangements may be used. The components shown in the figure may be implemented through hardware, software, or a combination of software and hardware.

An embodiment of this application further provides a computer-readable storage medium. The computer-readable storage medium stores computer instructions. When the computer instructions are run on a server, the server is enabled to perform the related method steps to implement the adaptive search method for a neural network in the foregoing embodiments.

An embodiment of this application further provides a computer program product. When the computer program product runs on a computer, the computer is enabled to perform the foregoing related steps to implement the adaptive search method for a neural network in the foregoing embodiments.

In addition, an embodiment of this application further provides an apparatus. The apparatus may be specifically a component or a module, and the apparatus may include a processor and a memory that are connected to each other. The memory is configured to store computer-executable instructions. When the apparatus runs, the processor may execute the computer-executable instructions stored in the memory, so that the apparatus performs the adaptive search method for a neural network in the foregoing method embodiments.

The apparatus, the computer-readable storage medium, the computer program product, or the chip provided in the embodiments of this application is configured to perform the corresponding method provided above. Therefore, for beneficial effects that can be achieved by the apparatus, the computer-readable storage medium, the computer program product, or the chip, refer to beneficial effects in the corresponding method provided above. Details are not described herein again.

The foregoing descriptions about implementations allow a person skilled in the art to clearly understand that, for the purpose of convenient and brief description, division into the foregoing functional modules is used as an example for illustration. During actual application, the foregoing functions may be allocated to different functional modules and implemented based on requirements, that is, an inner structure of an apparatus is divided into different functional modules to implement all or some of the functions described above. For a detailed working process of the foregoing system, apparatus, and units, refer to a corresponding process in the foregoing method embodiments. Details are not described herein again.

In the several embodiments provided in this application, it should be understood that the disclosed methods may be implemented in other manners. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in the embodiments of this application. The foregoing storage medium includes any medium that can store program instructions, for example, a flash memory, a removable hard disk, a read-only memory, a random access memory, a magnetic disk, or an optical disc.

The foregoing descriptions are merely specific implementations of this application, but are not intended to limit the protection scope of this application. Any mutation or replacement within the technical scope disclosed in this application shall fall within the protection scope of this application. Therefore, the protection scope of this application shall be subject to the protection scope of the claims.

**Claims**

1. An adaptive search method for a neural network, wherein the method comprises:

   receiving a search condition set, wherein the search condition set comprises target hardware platform information, network structure information of a source neural network, and one or more evaluation metrics, and the network structure information of the source neural network is used to represent the source neural network; and
   outputting a target neural network, wherein the target neural network is obtained by performing a subnet search process on a trained super network based on the one or more evaluation metrics, the trained super network is obtained by performing a training process on a to-be-trained super network, the to-be-trained super network is obtained by extending a network structure of the source neural network, and an evaluation result of the target neural network running on a target hardware platform is better than an evaluation result of the source neural network running on the target hardware platform.

2. The method according to claim 1, wherein the one or more evaluation metrics comprise any one or more of:

   a precision evaluation metric of a neural network model, a time overhead evaluation metric of the neural network model, a storage space evaluation metric of the neural network model, a power consumption evaluation metric of the neural network model, a utilization evaluation metric of a tensor calculation unit of the neural network model, and a memory read/write speed evaluation metric of the neural network model, wherein
   the precision evaluation metric of the neural network model comprises that precision of the target neural network is not less than a precision threshold;
   the time overhead evaluation metric of the neural network model comprises that a time overhead of the target neural network is not greater than a time overhead threshold;
   the storage space evaluation metric of the neural network model comprises that storage space occupied by the target neural network is not greater than a storage space threshold;
   the power consumption evaluation metric of the neural network model comprises that power consumption of the target neural network is not greater than a power consumption threshold;
   the utilization evaluation metric of the tensor calculation unit of the neural network model comprises that utilization of the tensor calculation unit of the target neural network is not less than a utilization threshold of the tensor calculation unit; and
   the memory read/write speed evaluation metric of the neural network model comprises that a memory read/write speed of the target neural network is not greater than a memory read/write speed threshold.

3. The method according to claim 1 or 2, wherein that the target neural network is obtained by performing a subnet search process on a trained super network based on the one or more evaluation metrics comprises:
the target neural network is obtained by performing the subnet search process on one or more to-be-evaluated candidate subnets in a target search range based on the one or more evaluation metrics, wherein the one or more to-be-evaluated candidate subnets in the target search range are obtained from the trained super network by using a first knowledge base.

4. The method according to claim 1 or 2, wherein that the target neural network is obtained by performing a subnet search process on a trained super network based on the one or more evaluation metrics comprises:
the target neural network is obtained by performing the search process on the trained super network based on an evaluation result or evaluation results of one or more to-be-evaluated candidate subnets, wherein the evaluation result or the evaluation results of the one or more to-be-evaluated candidate subnets is/are obtained based on the one or more evaluation metrics and correspondence information; the correspondence information comprises a correspondence between the target hardware platform, network structures of M neural networks, N evaluation metrics, and P evaluation results, wherein M, N, and P are all positive integers; and the network structures of the M neural networks are comprised in a network structure of the trained super network.

5. The method according to claim 1 or 2, wherein the one or more evaluation metrics comprise the time overhead evaluation metric of the neural network model, and the time overhead evaluation metric of the neural network model comprises that the time overhead of the target neural network is not greater than the time overhead threshold; and correspondingly, that the target neural network is obtained by performing a subnet search process on a trained super network based on the one or more evaluation metrics comprises:
the target neural network is obtained by performing, based on the time overhead evaluation metric of the neural network model, subnet evaluation on one or more candidate subnets comprised in the trained super network.

6. The method according to any one of claims 1 to 5, wherein that the to-be-trained super network is obtained by extending a network structure of the source neural network comprises:
the to-be-trained super network is obtained in a horizontal extension mode and/or a vertical extension mode based on the network structure of the source neural network, an extension rule in a second knowledge base, and the target hardware platform information.

7. The method according to any one of claims 1 to 6, wherein third operator sets in the to-be-trained super network comprise first operator sets and/or derived second operator sets, wherein the first operator sets are comprised in the source neural network.

8. The method according to claim 4, wherein that the evaluation result or the evaluation results of the one or more to-be-evaluated candidate subnets is/are obtained based on the one or more evaluation metrics and correspondence information comprises:
the evaluation result or the evaluation results of the one or more to-be-evaluated candidate subnets is/are obtained based on a proportional relationship between the N evaluation metrics and based on evaluation results corresponding to first operator sets and/or derived second operator sets in third operator sets in the trained super network, wherein the evaluation results corresponding to the first operator sets and/or the derived second operator sets in the third operator sets in the trained super network are obtained based on the one or more evaluation metrics and the correspondence information, and the first operator sets are comprised in the source neural network.

9. The method according to claim 8, wherein that the evaluation result or the evaluation results of the one or more to-be-evaluated candidate subnets is/are obtained based on a proportional relationship between the N evaluation metrics and based on evaluation results corresponding to first operator sets and/or derived second operator sets in third operator sets in the trained super network comprises:
the evaluation result or the evaluation results of the one or more to-be-evaluated candidate subnets is/are determined based on r pre-search processes, wherein each pre-search process in the r pre-search processes is used to: retrain the trained super network based on specified values of weights of the evaluation results of the first operator sets and/or the derived second operator sets, the N evaluation metrics, and the proportional relationship between the N evaluation metrics, and adjust, in the retraining process, the weights corresponding to the evaluation results of the first operator sets and the derived second operator sets; and determine a to-be-evaluated candidate subnet and an evaluation result of the to-be-evaluated candidate subnet based on adjusted weights corresponding to the evaluation results of the first operator sets and the derived second operator sets, wherein r is a positive integer.

10. The method according to claim 8 or 9, wherein the N evaluation metrics comprise the precision evaluation metric of the neural network model and the time overhead evaluation metric of the neural network model; and correspondingly, the proportional relationship between the N evaluation metrics comprises a proportional relationship between the precision evaluation metric and the time overhead evaluation metric.

11. The method according to claim 4, wherein that the target neural network is obtained by performing the search process on the trained super network based on an evaluation result or evaluation results of one or more to-be-evaluated candidate subnets comprises:
obtaining the target neural network from $K \times (n + 1)$ target candidate subnets, wherein the $K \times (n + 1)$ target candidate subnets are obtained by sorting the evaluation result or the evaluation results of the one or more to-be-evaluated candidate subnets, to obtain K first target candidate subnets corresponding to first K evaluation results; obtaining S second target candidate subnets obtained after an $n^{th}$ round of hybridization and/or mutation based on the trained super network and the K first target candidate subnets, wherein n is a preset quantity of screening times, $n \geq 1$, K and S are positive integers, and $S > K$; and obtaining evaluation results of the S second target candidate subnets based on the one or more evaluation metrics and the correspondence information, and sorting the evaluation results, to obtain K second target candidate subnets corresponding to first K evaluation results.

12. The method according to any one of claims 1 to 10, wherein the source neural network is a neural network running on a source hardware platform, or the target neural network is a neural network running on the target hardware platform; and the source hardware platform is different from the target hardware platform.

13. The method according to any one of claims 1 to 10, wherein the source neural network and the target neural network are neural networks running on the target hardware platform in different time domains.

14. The method according to any one of claims 1 to 13, wherein the method further comprises:
sending a trained target neural network to a device comprising the target hardware platform, wherein the trained target neural network is obtained by performing a training process on the target neural network.

15. The method according to claim 14, wherein the trained target neural network runs on the target hardware platform, to perform a target detection task and/or an image classification task.

16. An adaptive search apparatus for a neural network, wherein the apparatus comprises a receiving unit and a sending unit, wherein

the receiving unit is configured to receive a search condition set, wherein the search condition set comprises target hardware platform information, network structure information of a source neural network, and one or more evaluation metrics, and the network structure information of the source neural network is used to represent the source neural network; and
the sending unit is configured to output a target neural network, wherein the target neural network is obtained by performing a subnet search process on a trained super network based on the one or more evaluation metrics, the trained super network is obtained by performing a training process on a to-be-trained super network, the to-be-trained super network is obtained by extending a network structure of the source neural network, and an evaluation result of the target neural network running on a target hardware platform is better than an evaluation result of the source neural network running on the target hardware platform.

17. The apparatus according to claim 16, wherein the one or more evaluation metrics comprise any one or more of:

a precision evaluation metric of a neural network model, a time overhead evaluation metric of the neural network model, a storage space evaluation metric of the neural network model, a power consumption evaluation metric of the neural network model, a utilization evaluation metric of a tensor calculation unit of the neural network model, and a memory read/write speed evaluation metric of the neural network model, wherein
the precision evaluation metric of the neural network model comprises that precision of the target neural network is not less than a precision threshold;
the time overhead evaluation metric of the neural network model comprises that a time overhead of the target neural network is not greater than a time overhead threshold;
the storage space evaluation metric of the neural network model comprises that storage space occupied by the target neural network is not greater than a storage space threshold;
the power consumption evaluation metric of the neural network model comprises that power consumption of the target neural network is not greater than a power consumption threshold;

the utilization evaluation metric of the tensor calculation unit of the neural network model comprises that utilization of the tensor calculation unit of the target neural network is not less than a utilization threshold of the tensor calculation unit; and

the memory read/write speed evaluation metric of the neural network model comprises that a memory read/write speed of the target neural network is not greater than a memory read/write speed threshold.

18. The apparatus according to claim 16 or 17, wherein that the target neural network is obtained by performing a subnet search process on a trained super network based on the one or more evaluation metrics comprises:
the target neural network is obtained by performing the subnet search process on one or more to-be-evaluated candidate subnets in a target search range based on the one or more evaluation metrics, wherein the one or more to-be-evaluated candidate subnets in the target search range are obtained from the trained super network by using a first knowledge base.

19. The apparatus according to claim 16 or 17, wherein that the target neural network is obtained by performing a subnet search process on a trained super network based on the one or more evaluation metrics comprises:
the target neural network is obtained by performing the search process on the trained super network based on an evaluation result or evaluation results of one or more to-be-evaluated candidate subnets, wherein the evaluation result or the evaluation results of the one or more to-be-evaluated candidate subnets is/are obtained based on the one or more evaluation metrics and correspondence information; the correspondence information comprises a correspondence between the target hardware platform, network structures of M neural networks, N evaluation metrics, and P evaluation results, wherein M, N, and P are all positive integers; and the network structures of the M neural networks are comprised in a network structure of the trained super network.

20. The apparatus according to claim 16 or 17, wherein the one or more evaluation metrics comprise the time overhead evaluation metric of the neural network model, and the time overhead evaluation metric of the neural network model comprises that the time overhead of the target neural network is not greater than the time overhead threshold; and correspondingly, that the target neural network is obtained by performing a subnet search process on a trained super network based on the one or more evaluation metrics comprises:
the target neural network is obtained by performing, based on the time overhead evaluation metric of the neural network model, subnet evaluation on one or more candidate subnets comprised in the trained super network.

21. The apparatus according to any one of claims 16 to 20, wherein that the to-be-trained super network is obtained by extending a network structure of the source neural network comprises:
the to-be-trained super network is obtained in a horizontal extension mode and/or a vertical extension mode based on the network structure of the source neural network, an extension rule in a second knowledge base, and the target hardware platform information.

22. The apparatus according to any one of claims 16 to 21, wherein third operator sets in the to-be-trained super network comprise first operator sets and/or derived second operator sets, wherein the first operator sets are comprised in the source neural network.

23. The apparatus according to claim 19, wherein
that the evaluation result or the evaluation results of the one or more to-be-evaluated candidate subnets is/are obtained based on the one or more evaluation metrics and correspondence information comprises:
the evaluation result or the evaluation results of the one or more to-be-evaluated candidate subnets is/are obtained based on a proportional relationship between the N evaluation metrics and based on evaluation results corresponding to first operator sets and/or derived second operator sets in third operator sets in the trained super network, wherein the evaluation results corresponding to the first operator sets and/or the derived second operator sets in the third operator sets in the trained super network are obtained based on the one or more evaluation metrics and the correspondence information, and the first operator sets are comprised in the source neural network.

24. The apparatus according to claim 23, wherein
that the evaluation result or the evaluation results of the one or more to-be-evaluated candidate subnets is/are obtained based on a proportional relationship between the N evaluation metrics and based on evaluation results corresponding to first operator sets and/or derived second operator sets in third operator sets in the trained super network comprises:
the evaluation result or the evaluation results of the one or more to-be-evaluated candidate subnets is/are determined based on r pre-search processes, wherein each pre-search process in the r pre-search processes is used to: retrain the trained super network based on specified values of weights of the evaluation results of the first operator sets and/or the derived second operator sets, the N evaluation metrics, and the proportional relationship between the N evaluation metrics, and adjust, in the retraining process, the weights corresponding to the evaluation results of the first operator sets and the derived second operator sets; and determine a to-be-evaluated candidate subnet and an evaluation result of the to-be-evaluated candidate subnet based on adjusted weights corresponding to the evaluation results of the first operator sets and the derived second operator sets, wherein r is a positive integer.

25. The apparatus according to claim 23 or 24, wherein the N evaluation metrics comprise the precision evaluation metric of the neural network model and the time overhead evaluation metric of the neural network model; and correspondingly, the proportional relationship between the N evaluation metrics comprises a proportional relationship between the precision evaluation metric and the time overhead evaluation metric.

26. The apparatus according to claim 19, wherein
that the target neural network is obtained by performing the search process on the trained super network based on an evaluation result or evaluation results of one or more to-be-evaluated candidate subnets comprises:
obtaining the target neural network from K x (n + 1) target candidate subnets, wherein the K x (n + 1) target candidate subnets are obtained by sorting the evaluation result or the evaluation results of the one or more to-be-evaluated candidate subnets, to obtain K first target candidate subnets corresponding to first K evaluation results; obtaining S second target candidate subnets obtained after an $n^{th}$ round of hybridization and/or mutation based on the trained super network and the K first target candidate subnets, wherein n is a preset quantity of screening times, $n \geq 1$, K and S are positive integers, and S > K; and obtaining evaluation results of the S second target candidate subnets based on the one or more evaluation metrics and the correspondence information, and sorting the evaluation results, to obtain K second target candidate subnets corresponding to first K evaluation results.

27. The apparatus according to any one of claims 16 to 26, wherein the source neural network is a neural network running on a source hardware platform, or the target neural network is a neural network running on the target hardware platform; and the source hardware platform is different from the target hardware platform.

28. The apparatus according to any one of claims 16 to 27, wherein the source neural network and the target neural network are neural networks running on the target hardware platform in different time domains.

29. The apparatus according to any one of claims 16 to 28, wherein
the sending unit is further configured to send a trained target neural network to a device comprising the target hardware platform, wherein the trained target neural network is obtained by performing a training process on the target neural network.

30. The apparatus according to claim 29, wherein the trained target neural network runs on the target hardware platform, to perform a target detection task and/or an image classification task.

31. A server, comprising:

one or more processors;
a memory; and
one or more computer programs, wherein the one or more computer programs are stored in the memory, the one or more computer programs comprise instructions, and when the instructions are executed by the server, the server is enabled to perform the adaptive search method for a neural network according to any one of claims 1 to 15.

32. A computer-readable storage medium, comprising computer instructions, wherein when the computer instructions are run on a server, the server is enabled to perform the adaptive search method for a neural network according to any one of claims 1 to 15.

33. A computer program product, wherein when the computer program product runs on a computer, the computer is enabled to perform the adaptive search method for a neural network according to any one of claims 1 to 15.

34. A communication system, comprising at least one server and at least one terminal device, wherein the at least one server performs the adaptive search method for a neural network according to any one of claims 1 to 15; the at least one terminal device sends a search condition set to the at least one server, wherein the search condition set comprises target hardware platform information, network structure information of a source neural network, and one or more evaluation metrics, and the network structure information of the source neural network is used to represent the source neural network; and the at least one terminal device receives a trained target neural network sent by the at least one server.

35. An adaptive search method for a neural network, wherein the method comprises:

sending a search condition set to at least one server, wherein the search condition set comprises target hardware platform information, network structure information of a source neural network, and one or more evaluation metrics, and the network structure information of the source neural network is used to represent the source neural network; and

receiving a trained target neural network sent by the at least one server, wherein the trained target neural network is obtained by the at least one server by performing a training process on the target neural network, the target neural network is obtained by the at least one server by performing a subnet search process on a trained super network based on the one or more evaluation metrics, the trained super network is obtained by the at least one server by performing a training process on a to-be-trained super network, the to-be-trained super network is obtained by the at least one server by extending a network structure of the source neural network, and an evaluation result of the target neural network running on a target hardware platform is better than an evaluation result of the source neural network running on the target hardware platform.

36. The method according to claim 35, wherein the method comprises:
determining whether to send the trained target neural network to a device comprising the target hardware platform.

37. An adaptive search apparatus for a neural network, wherein the apparatus comprises a sending unit and a receiving unit, wherein

the sending unit is configured to send a search condition set to at least one server, wherein the search condition set comprises target hardware platform information, network structure information of a source neural network, and one or more evaluation metrics, and the network structure information of the source neural network is used to represent the source neural network; and

the receiving unit is configured to receive a trained target neural network sent by the at least one server, wherein the trained target neural network is obtained by the at least one server by performing a training process on the target neural network, the target neural network is obtained by the at least one server by performing a subnet search process on a trained super network based on the one or more evaluation metrics, the trained super network is obtained by the at least one server by performing a training process on a to-be-trained super network, the to-be-trained super network is obtained by the at least one server by extending a network structure of the source neural network, and an evaluation result of the target neural network running on a target hardware platform is better than an evaluation result of the source neural network running on the target hardware platform.

38. The apparatus according to claim 37, wherein the apparatus further comprises a processing unit, wherein
the processing unit is configured to determine whether to send the trained target neural network to a device comprising the target hardware platform.

| Interaction interface |
| Target hardware platform information | Structure information of a source neural network | One or more evaluation metrics | ... |

Memory ◄► Processor | Construction and training of a super network | Search for a target neural network | ...

Data processing device (server)

Terminal device

FIG. 1

FIG. 2

FIG. 3

S101: Receive a search condition set

S102: Perform a training process on a to-be-trained super network based on a training dataset, to obtain a trained super network, where the to-be-trained super network is obtained by extending a network structure of a source neural network

S103: Perform a subnet search process on the trained super network based on one or more evaluation metrics, to obtain network structure information of a target neural network, where the network structure information of the target neural network is used to represent the target neural network

FIG. 4

FIG. 5

(a)

(b)

FIG. 6

Source neural network | Super network in the conventional technology | Super network in this application

**(a)**

| Input layer |

↓

| 7 x 7 convolution operator |

↓

| Pooling layer operator |

↓

| 3 x 3 convolution operator |

↓

| PReLU activation function |

↓

...

↓

| Output layer |

(a)

**(b)**

| Input layer |

↓

| 3 x 3 convolution operator | | 7 x 7 convolution operator | | 5 x 5 convolution operator |

↓

| Pooling layer operator |

↓

| 1 x 1 convolution operator | | 3 x 3 convolution operator | | 5 x 5 convolution operator |

↓

| PReLU activation function | | PReLU activation function |

↓

...

↓

| Output layer |

(b)

**(c)**

| Input layer |

↓

| 7 x 7 convolution operator |

↓

| Pooling layer operator |

↓

| 1 x 1 convolution operator | | 3 x 3 convolution operator | | 5 x 5 convolution operator |

↓

| PReLU activation function |

↓

...

↓

| Output layer |

(c)

FIG. 7

EP 4 080 416 A1

**(a)**

Input layer

1 x 1 convolution operator

3 x 3 convolution operator

1 x 1 convolution operator

Summation operator

1 x 1 convolution operator

3 x 3 convolution operator

1 x 1 convolution operator

Summation operator

...

Output layer

**(b)**

Input layer

1 x 1 convolution operator

5 x 5 convolution operator

1 x 1 convolution operator

Summation operator

1 x 1 convolution operator

3 x 3 convolution operator

1 x 1 convolution operator

Summation operator

1 x 1 convolution operator

7 x 7 convolution operator

1 x 1 convolution operator

Summation operator

1 x 1 convolution operator

5 x 5 convolution operator

1 x 1 convolution operator

Summation operator

1 x 1 convolution operator

3 x 3 convolution operator

1 x 1 convolution operator

Summation operator

1 x 1 convolution operator

7 x 7 convolution operator

1 x 1 convolution operator

Summation operator

...

Output layer

FIG. 8

Super network

FIG. 9

EP 4 080 416 A1

Search condition set (target hardware
platform information, network structure
information of a source neural network,
and one or more evaluation metrics)

Input

Perform subnet search on a trained super network

Construct and
train a super
network

Obtain subnets from
the trained super
network

Subnet
evaluation

Output

Network structure
information of one
or more target
neural networks

Knowledge
base

One or more
evaluation
metrics

FIG. 10

Trained super network

FIG. 11(a)

To-be-evaluated candidate subnet 1

**Third operator set 1**
- W1 = 0.25, First operator set 1
- W2 = 0.5, Second operator set 1
- W3 = 0.25, Second arithmetic set 2

**Third operator set 2**
- W4 = 0.2, First operator set 2
- W5 = 0.2, Second operator set 3
- W6 = 0.6, Second operator set 4

**Third operator set 3**
- W7 = 0.1, Second operator set 5
- W8 = 0.9, Second operator set 6

**Third operator set 4**
- W9 = 0.1, Second operator set 7
- W10 = 0.1, Second operator set 8
- W11 = 0.7, First operator set 3
- W12 = 0.1, Second operator set 9

Proportional relationship 1

**FIG. 11(b)**

To-be-evaluated candidate subnet 2

FIG. 11(c)

EP 4 080 416 A1

Trained super network

| Third operator set 1 | Third operator set 2 | Third operator set 3 | Third operator set 4 |

First operator set 1

Second operator set 1

Second operator set 2

First operator set 2

Second operator set 3

Second operator set 4

Second operator set 5

Second operator set 6

Second operator set 7

Second operator set 8

First operator set 3

Second operator set 9

FIG. 12(a)

First target candidate subnet 1

| Third operator set 1 | Third operator set 2 | Third operator set 3 | Third operator set 4 |

First operator set 1

First operator set 2

Second operator set 5

Second operator set 7

Second operator set 1

Second operator set 3

Second operator set 8

Second operator set 2

Second operator set 4

Second operator set 6

First operator set 3

Second operator set 9

FIG. 12(b)

EP 4 080 416 A1

First target candidate subnet 2

| Third operator set 1 | Third operator set 2 | Third operator set 3 | Third operator set 4 |

First operator set 1

Second operator set 1

Second operator set 2

First operator set 2

Second operator set 3

Second operator set 4

Second operator set 5

Second operator set 6

Second operator set 7

Second operator set 8

First operator set 3

Second operator set 9

FIG. 12(c)

EP 4 080 416 A1

S201: Construct a target neural network based on network structure information of the target neural network

↓

S202: Perform a training process on the target neural network based on a second training dataset, to obtain a trained target neural network

FIG. 13

Apparatus

Receiving unit — 1401

Construction unit — 1402

Training unit — 1403

Search unit — 1404

FIG. 14

```
                    ┌─ 1501            ┌─ 1505                            ┌─ 1503
         ┌──────────────────┐   ┌ ─ ─ ─ ─ ─ ─ ─ ┐      ┌──────────────────┐
         │    Processor     │   │   Processor   │      │                  │
         │  ┌────────────┐  │   │ ┌───────────┐ │      │                  │
         │  │   CPU 0    │  │   │ │   CPU 0   │ │      │                  │
         │  └────────────┘  │   │ └───────────┘ │      │                  │
         │  ┌ ─ ─ ─ ─ ─ ┐   │   │ ┌ ─ ─ ─ ─ ─┐  │      │                  │
         │    CPU 1       │  │   │   CPU 1    │ │      │                  │
Communication└ ─ ─ ─ ─ ─ ┘  │   │ └ ─ ─ ─ ─ ─┘  │      │     Memory       │
line 1502  └──────────────────┘  └ ─ ─ ─ ─ ─ ─ ─ ┘      │                  │
       ┐                                                │                  │
━━━━━━━━━━━━━━━━━━━━━━━━━━━━━━━━━━━━━━━━━━━━━━━━━━━━━━━━━━│                  │
       │     ┌─ 1504                                    │                  │
   ┌──────────────────┐                                 └──────────────────┘
   │  Communication   │
   │    interface     │
   └──────────────────┘
```

FIG. 15

**INTERNATIONAL SEARCH REPORT**

| International application No. |
| --- |
| **PCT/CN2021/072294** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT, CNKI, WPI, EPODOC: 神经网络, 网络结构, 搜索, 硬件, 平台, 超级网络, 超网络, 评估, 指标, 子网络, neural network, architecture, search, hardware, platform, super network, sub-network, assessment, estimation, index

**C. DOCUMENTS CONSIDERED TO BE RELEVANT**

| Category* | Citation of document, with indication, where appropriate, of the relevant passages | Relevant to claim No. |
| --- | --- | --- |
| X | CN 110659721 A (ZHEJIANG PROVINCE ADVANCED INSTITUTE OF INFORMATION TECHNOLOGY, PEKING UNIVERSTIY et al.) 07 January 2020 (2020-01-07) description paragraphs 3-8, 23-37 | 1-2, 12-17, 27-38 |
| X | US 2019080232 A1 (INTERNATIONAL BUSINESS MACHINES CORPORATION) 14 March 2019 (2019-03-14) description, paragraphs 34-90 | 1, 14-16, 29-38 |
| A | CN 108985386 A (BEIJING KUANGSHI TECHNOLOGY CO., LTD.) 11 December 2018 (2018-12-11) entire document | 1-38 |
| A | CN 109919315 A (IFLYTEK CO., LTD.) 21 June 2019 (2019-06-21) entire document | 1-38 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 April 2021** | **15 April 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/072294**

| Patent document cited in search report | | | Publication date (day/month/year) | Patent family member(s) | Publication date (day/month/year) |
|---|---|---|---|---|---|
| CN | 110659721 | A | 07 January 2020 | None | |
| US | 2019080232 | A1 | 14 March 2019 | None | |
| CN | 108985386 | A | 11 December 2018 | None | |
| CN | 109919315 | A | 21 June 2019 | None | |

Form PCT/ISA/210 (patent family annex) (January 2015)

**REFERENCES CITED IN THE DESCRIPTION**

**Patent documents cited in the description**

- CN 202010044288